(19) Europäisches Patentamt

European Patent Office

Office européen des brevets

(11) **EP 4 319 215 A1**

(12) **EUROPEAN PATENT APPLICATION**
published in accordance with Art. 153(4) EPC

(43) Date of publication:
**07.02.2024 Bulletin 2024/06**

(21) Application number: **22778553.2**

(22) Date of filing: **15.03.2022**

(51) International Patent Classification (IPC):
*H04W 4/40* (2018.01)  *H04W 72/02* (2009.01)
*H04W 76/14* (2018.01)  *H04W 52/02* (2009.01)

(52) Cooperative Patent Classification (CPC):
**H04W 4/40; H04W 24/08; H04W 72/02;
H04W 76/14; H04W 76/28;** H04W 52/02;
Y02D 30/70

(86) International application number:
**PCT/CN2022/080915**

(87) International publication number:
**WO 2022/206369 (06.10.2022 Gazette 2022/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **01.04.2021 CN 202110356871**

(71) Applicant: **Datang Mobile Communications
Equipment Co., Ltd.
Beijing 100085 (CN)**

(72) Inventors:
• **LIU, Tianxin**
**Beijing 100085 (CN)**
• **REN, Xiaotao**
**Beijing 100085 (CN)**
• **LI, Shupeng**
**Beijing 100085 (CN)**
• **MA, Teng**
**Beijing 100085 (CN)**

(74) Representative: **Maiwald GmbH
Engineering
Elisenhof
Elisenstrasse 3
80335 München (DE)**

(54) **PARTIAL SENSING METHOD FOR SIDELINK RESOURCE, AND DEVICE**

(57)    Disclosed are a partial sensing method and a partial sensing device for a sidelink resource. The method includes: determining, by a terminal, at least one set of partial sensing configuration parameters from at least two different sets of partial sensing configuration parameters; and performing, by the terminal, partial sensing by using the at least one set of partial sensing configuration parameters.

```
determining, by the terminal, at least one set of partial sensing
configuration parameters from at least two different sets of
partial sensing configuration parameters          ⟍ 31

                         ↓

performing, by the terminal, partial sensing by using the at least
one set of partial sensing configuration parameters          ⟍ 32
```

FIG. 3

## Description

## CROSS-REFERENCE TO RELATED APPLICATION

This application claims a priority to Chinese Patent Application No. 202110356871.7 filed on April 1, 2021, the disclosure of which is incorporated in its entirety by reference herein.

## TECHNICAL FIELD

The present disclosure relates to the field of mobile communication technology, in particular to a partial sensing method and a partial sensing device for a sidelink resource.

## BACKGROUND

In a 5th generation mobile communication technology (5th Generation Mobile Communication Technology, 5G) new radio (New Radio, NR) vehicle-to-everything (Vehicle-to-Everything, V2X) system, a sidelink (Sidelink) is used for communication between terminals. The relevant standards support two resource allocation modes for scheduling time-frequency resources used by the data communication, the first one is mode1 (Mode1) resource allocation mode where the time-frequency resources required for the communication of the terminal are uniformly scheduled by a base station, and the second one is mode2 (Mode2) resource allocation mode where the terminal autonomously selects a time-frequency resource required for the communication in case of no participation of the base station.

Due to the lack of unified scheduling by the base station, the Mode2 resource allocation mode allows a terminal/user equipment (User Equipment, LTE) to determine resource occupancy of other UEs based on a resource sensing mechanism and select a resource based on a resource sensing result, thereby reducing collision probability and enhancing transmission robustness.

In V2X standards of long time evolution (Long Time Evolution, LTE) of 4th generation mobile communication technology (4th Generation Mobile Communication Technology, 4G), it supports a partial sensing mechanism to meet the energy-saving requirement for power usage effectiveness (Power Usage Effectiveness, PLTE), and allows terminals to intermittently perform sensing, thus achieving the goal of power conservation. At present, the partial sensing technique is only applied in LTE, and partial sensing operations are applied based on energy-saving requirements for PLTE. NR V2X standards have not yet supported the partial sensing. In addition, the current NR standards only support continuous sensing and does not have an energy-saving sensing mechanism for PLTE. The partial operations in LTE only consider periodic transmission and do not have a re-evaluation mechanism. Additionally, there is only one configuration for partial sensing operations for transmitting a single service, which cannot be flexibly configured based on the impacts of periodic transmission and non-periodic transmission.

## SUMMARY

At least one embodiment of the present disclosure provides a partial sensing method and a partial sensing device for a sidelink resource, which can support configuration parameters for different partial sensing operations and improve the flexibility of partial sensing operations.

According to one aspect of the present disclosure, at least one embodiment provides a partial sensing method for a sidelink resource, which includes:

determining, by a terminal, at least one set of partial sensing configuration parameters from at least two different sets of partial sensing configuration parameters; and
performing, by the terminal, partial sensing by using the at least one set of partial sensing configuration parameters.

Optionally, a sensing density of each set of partial sensing configuration parameters is different from a sensing density of each other set of partial sensing configuration parameters.

Optionally, each set of partial sensing configuration parameters includes the following parameters: a minimum quantity of candidate resources and a bit sequence of candidate sensing intervals.

Optionally, after performing the partial sensing by using the at least one set of partial sensing configuration parameters, the method further includes: performing initial transmission and/or retransmission of data based on a sensing result obtained from the partial sensing.

Optionally, the at least one set of partial sensing configuration parameters includes a first set of configuration parameters and a second set of configuration parameters, and the performing, by the terminal, the partial sensing by using the at least one set of partial sensing configuration parameters includes: performing the partial sensing by using the first set of configuration parameters when the terminal is in a discontinuous reception (DRX) active state (DRX on duration); and performing the partial sensing by using the second set of configuration parameters when the terminal is in a DRX inactive state (DRX inactive duration).

Optionally, the performing the partial sensing by using the first set of configuration parameters when the terminal is in the discontinuous reception (DRX) active state (DRX on duration); and performing the partial sensing by using the second set of configuration parameters when the terminal is in the DRX inactive state (DRX inactive duration) specifically includes:

in a period from a sensing start time to a time of a resource selection, performing the partial sensing by using the first set of configuration parameters when the terminal is in the DRX on duration of DRX, and performing the partial sensing by using the second set of configuration parameters when the terminal is in the DRX inactive duration of DRX; or,

in a period from a sensing start time to a time of the initial transmission of the data, performing the partial sensing by using the first set of configuration parameters when the terminal is in the DRX on duration of DRX, and performing the partial sensing by using the second set of configuration parameters when the terminal is in the DRX inactive duration of DRX; or,

in a period from a sensing start time to a time of a last retransmission of the data, performing the partial sensing by using the first set of configuration parameters when the terminal is in the DRX on duration of DRX, and performing the partial sensing by using the second set of configuration parameters when the terminal is in the DRX inactive duration of DRX.

Optionally, the at least one set of partial sensing configuration parameters includes a first set of configuration parameters and a second set of configuration parameters, and the performing, by the terminal, the partial sensing by using the at least one set of partial sensing configuration parameters includes: performing, by the terminal in a period from a sensing start time to a time of a data initial transmission, the partial sensing by using the first set of configuration parameters and the second set of configuration parameters.

Optionally, the performing, by the terminal in the period from the sensing start time to the time of the data initial transmission, the partial sensing by using the first set of configuration parameters and the second set of configuration parameters specifically includes:

performing, by the terminal in a period from the sensing start time to a time of a resource selection, the partial sensing by using the first set of configuration parameters, and performing, by the terminal in a period from the time of the resource selection to the time of the data initial transmission, the partial sensing by using the second set of configuration parameters; or,

performing, by the terminal in a period from the sensing start time to a first time, the partial sensing by using the first set of configuration parameters, and performing, by the terminal in a period from the first time to the time of the data initial transmission, the partial sensing by using the second set of configuration parameters, where the first time is located before the time of the data initial transmission, and an interval between the first time and the time of the data initial transmission is a first preset duration f1.

Optionally, the at least one set of partial sensing configuration parameters includes a first set of configuration parameters and a second set of configuration parameters, and the performing, by the terminal, the partial sensing by using the at least one set of partial sensing configuration parameters includes: performing, by the terminal in a period from a sensing start time to a time of a data retransmission, the partial sensing by using the first set of configuration parameters and the second set of configuration parameters.

Optionally, the performing, by the terminal in the period from the sensing start time to the time of the data retransmission, the partial sensing by using the first set of configuration parameters and the second set of configuration parameters specifically includes:

performing, by the terminal in a period from the sensing start time to a time of a resource selection, the partial sensing by using the first set of configuration parameters, and performing, by the terminal in a period from the time of the resource selection to the time of the data retransmission, the partial sensing by using the second set of configuration parameters; or,

performing, by the terminal in a period from the sensing start time to a second time, the partial sensing by using the first set of configuration parameters, and performing, by the terminal in a period from the second time to a time of a last data retransmission, the partial sensing by using the second set of configuration parameters, where the second time is located before a time of a data initial transmission, and an interval between the second time and the time of the data initial transmission is a second preset duration f2.

Optionally, the at least one set of partial sensing configuration parameters only contains a first set of configuration parameters or a second set of configuration parameters, and the performing, by the terminal, the partial sensing by using the at least one set of partial sensing configuration parameters includes: performing, by the terminal in a period from a sensing start time to a time of a data initial transmission, the partial sensing by using the first set of configuration parameters or the second set of configuration parameters.

Optionally, the performing, by the terminal in the period from the sensing start time to the time of the data initial transmission, the partial sensing by using the first set of configuration parameters or the second set of configuration parameters specifically includes:

performing, by the terminal in a period from the sensing start time to a time of a resource selection, the partial sensing by using the first set of configuration parameters, and performing, by the terminal in a period from the time of the resource selection to the time of the data initial transmission, the partial sensing by continuing using the first set of configuration parameters; or,
performing, by the terminal in a period from the sensing start time to a time of a resource selection, the partial sensing by using the second set of configuration parameters, and performing, by the terminal in a period from the time of the resource selection to the time of the data initial transmission, the partial sensing by continuing using the second set of configuration parameters; or,
performing, by the terminal in a period from the sensing start time to a third time, the partial sensing by using the first set of configuration parameters, and performing, by the terminal in a period from the third time to the time of the data initial transmission, the partial sensing by continuing using the first set of configuration parameters, where the third time is located before the time of the data initial transmission, and an interval between the third time and the time of the data initial transmission is a third preset duration f3; or,
performing, by the terminal in a period from the sensing start time to a third time, the partial sensing by using the second set of configuration parameters, and performing, by the terminal in a period from the third time to the time of the data initial transmission, the partial sensing by continuing using the second set of configuration parameters, where the third time is located before the time of the data initial transmission, and an interval between the third time and the time of the data initial transmission is a third preset duration f3.

Optionally, the at least one set of partial sensing configuration parameters only contains a first set of configuration parameters or a second set of configuration parameters, and the performing, by the terminal, the partial sensing by using the at least one set of partial sensing configuration parameters includes: performing, by the terminal in a period from a sensing start time to a time of a data retransmission, the partial sensing by using the first set of configuration parameters or the second set of configuration parameters.
Optionally, the performing, by the terminal in the period from the sensing start time to the time of the data retransmission, the partial sensing by using the first set of configuration parameters or the second set of configuration parameters specifically includes:

performing, by the terminal in a period from the sensing start time to a time of a resource selection, the partial sensing by using the first set of configuration parameters, and performing, by the terminal in a period from the time of the resource selection to a time of a last data retransmission, the partial sensing by continuing using the first set of configuration parameters; or,
performing, by the terminal in a period from the sensing start time to a time of a resource selection, the partial sensing by using the second set of configuration parameters, and performing, by the terminal in a period from the time of the resource selection to a time of a last data retransmission, the partial sensing by continuing using the second set of configuration parameters; or,
performing, by the terminal in a period from the sensing start time to a fourth time, the partial sensing by using the first set of configuration parameters, and performing, by the terminal in a period from the fourth time to a time of a last data retransmission, the partial sensing by continuing using the first set of configuration parameters, where the fourth time is located before a time of a data initial transmission, and an interval between the fourth time and the time of the data initial transmission is a fourth preset duration f4; or,
performing, by the terminal in a period from the sensing start time to a fourth time, the partial sensing by using the second set of configuration parameters, and performing, by the terminal in a period from the fourth time to a time of a last data retransmission, the partial sensing by continuing using the second set of configuration parameters, where the fourth time is located before a time of a data initial transmission, and an interval between the fourth time and the time of the data initial transmission is a fourth preset duration f4.

Optionally, a sensing density of the first set of configuration parameters is lower than a sensing density of the second set of configuration parameters.
According to another aspect of the present disclosure, at least one embodiment provides a terminal, which includes: a memory, a transceiver and a processor. The memory is configured to store a computer program; the transceiver is configured to transmit and receive data under the control of the processor; the processor is configured to read the computer program in the memory and perform the following operations:

determining at least one set of partial sensing configuration parameters from at least two different sets of partial sensing configuration parameters; and
performing partial sensing by using the at least one set of partial sensing configuration parameters.

Optionally, a sensing density of each set of partial sensing configuration parameters is different from a sensing density of each other set of partial sensing configuration parameters.
Optionally, each set of partial sensing configuration parameters includes the following parameters: a minimum quantity of candidate resources and a bit sequence of candidate sensing intervals.
Optionally, the processor is further configured to read the computer program in the memory and perform the following operations: performing initial transmission and/or retransmission of data based on a sensing result obtained from the partial sensing, after performing the partial sensing by using the at least one set of partial sensing configuration parameters.

Optionally, the at least one set of partial sensing configuration parameters includes a first set of configuration parameters and a second set of configuration parameters, and the processor is configured to read the computer program in the memory and perform the following operations: performing the partial sensing by using the first set of configuration parameters when the terminal is in a discontinuous reception (DRX) active state (DRX on duration); and performing the partial sensing by using the second set of configuration parameters when the terminal is in a DRX inactive state (DRX inactive duration).

Optionally, the at least one set of partial sensing configuration parameters includes a first set of configuration parameters and a second set of configuration parameters, and the processor is further configured to read the computer program in the memory and perform the following operations:

in a period from a sensing start time to a time of a resource selection, performing the partial sensing by using the first set of configuration parameters when the terminal is in the DRX on duration of DRX, and performing the partial sensing by using the second set of configuration parameters when the terminal is in the DRX inactive duration of DRX; or,

in a period from a sensing start time to a time of the initial transmission of the data, performing the partial sensing by using the first set of configuration parameters when the terminal is in the DRX on duration of DRX, and performing the partial sensing by using the second set of configuration parameters when the terminal is in the DRX inactive duration of DRX; or,

in a period from a sensing start time to a time of a last retransmission of the data, performing the partial sensing by using the first set of configuration parameters when the terminal is in the DRX on duration of DRX, and performing the partial sensing by using the second set of configuration parameters when the terminal is in the DRX inactive duration of DRX.

Optionally, the at least one set of partial sensing configuration parameters includes a first set of configuration parameters and a second set of configuration parameters, and the processor is configured to read the computer program in the memory and perform the following operations: performing, in a period from a sensing start time to a time of a data initial transmission, the partial sensing by using the first set of configuration parameters and the second set of configuration parameters.

Optionally, the processor is further configured to read the computer program in the memory and perform the following operations:

performing, in a period from the sensing start time to a time of a resource selection, the partial sensing by using the first set of configuration parameters, and performing, in a period from the time of the resource selection to the time of the data initial transmission, the partial sensing by using the second set of configuration parameters; or,

performing, in a period from the sensing start time to a first time, the partial sensing by using the first set of configuration parameters, and performing, in a period from the first time to the time of the data initial transmission, the partial sensing by using the second set of configuration parameters, where the first time is located before the time of the data initial transmission, and an interval between the first time and the time of the data initial transmission is a first preset duration f1.

Optionally, the at least one set of partial sensing configuration parameters includes a first set of configuration parameters and a second set of configuration parameters, and the processor is configured to read the computer program in the memory and perform the following operations: performing in a period from a sensing start time to a time of a data retransmission, the partial sensing by using the first set of configuration parameters and the second set of configuration parameters.

Optionally, the processor is further configured to read the computer program in the memory and perform the following operations:

performing, in a period from the sensing start time to a time of a resource selection, the partial sensing by using the first set of configuration parameters, and performing, in a period from the time of the resource selection to the time of the data retransmission, the partial sensing by using the second set of configuration parameters; or,

performing, in a period from the sensing start time to a second time, the partial sensing by using the first set of configuration parameters, and performing, in a period from the second time to a time of a last data retransmission, the partial sensing by using the second set of configuration parameters, where the second time is located before a time of a data initial transmission, and an interval between the second time and the time of the data initial transmission is a second preset duration f2.

Optionally, the at least one set of partial sensing configuration parameters only contains a first set of configuration parameters or a second set of configuration parameters, and the processor is configured to read the computer program in the memory and perform the following operations: performing, in a period from a sensing start time to a time of a data initial transmission, the partial sensing by using the first set of configuration parameters or the second set of configuration parameters.

Optionally, the processor is further configured to read the computer program in the memory and perform the following operations:

performing, in a period from the sensing start time to a time of a resource selection, the partial sensing by using the first set of configuration parameters or the second set of configuration parameters, and performing, in a period from the time of the resource selection to the time of the data initial transmission, the partial sensing by continuing using the first set of configuration parameters or the second set of configuration parameters; or,

performing, in a period from the sensing start time to a third time, the partial sensing by using the first set of configuration parameters or the second set of configuration parameters, and performing, in a period from the third time to the time of the data initial transmission, the partial sensing by continuing using the first set of configuration parameters or the second set of configuration parameters, wherein the third time is located before the time of the data initial transmission, and an interval between the third time and the time of the data initial transmission is a third preset duration f3.

Optionally, the at least one set of partial sensing configuration parameters only contains a first set of configuration parameters or a second set of configuration parameters, and the processor is configured to read the computer program in the memory and perform the following operations: performing, in a period from a sensing start time to a time of a data retransmission, the partial sensing by using the first set of configuration parameters or the second set of configuration parameters.

Optionally, the processor is further configured to read the computer program in the memory and perform the following operations:

performing, in a period from the sensing start time to a time of a resource selection, the partial sensing by using the first set of configuration parameters or the second set of configuration parameters, and performing, in a period from the time of the resource selection to a time of a last data retransmission, the partial sensing by continuing using the first set of configuration parameters or the second set of configuration parameters; or,

performing, in a period from the sensing start time to a fourth time, the partial sensing by using the first set of configuration parameters or the second set of configuration parameters, and performing, in a period from the fourth time to a time of a last data retransmission, the partial sensing by continuing using the first set of configuration parameters or the second set of configuration parameters, wherein the fourth time is located before a time of a data initial transmission, and an interval between the fourth time and the time of the data initial transmission is a fourth preset duration f4.

Optionally, a sensing density of the first set of configuration parameters is lower than a sensing density of the second set of configuration parameters.

According to another aspect of the present disclosure, at least one embodiment provides a terminal, including:

a determination unit, configured to determine at least one set of partial sensing configuration parameters from at least two different sets of partial sensing configuration parameters; and

a sensing unit, configured to perform partial sensing by using the at least one set of partial sensing configuration parameters.

Optionally, a sensing density of each set of partial sensing configuration parameters is different from a sensing density of each other set of partial sensing configuration parameters.

Optionally, each set of partial sensing configuration parameters includes the following parameters: a minimum quantity of candidate resources and a bit sequence of candidate sensing intervals.

Optionally, the terminal further includes a transmission unit, configured to perform initial transmission and/or retransmission of data based on a sensing result obtained from the partial sensing, after performing the partial sensing by using the at least one set of partial sensing configuration parameters.

Optionally, the at least one set of partial sensing configuration parameters includes a first set of configuration parameters and a second set of configuration parameters, and the sensing unit is further configured to perform the partial sensing by using the first set of configuration parameters when the terminal is in a discontinuous reception (DRX) active state (DRX on duration); and performing the partial sensing by using the second set of configuration parameters when the terminal is in a DRX inactive state (DRX inactive duration).

Optionally, the sensing unit is further configured to:

in a period from a sensing start time to a time of a resource selection, perform the partial sensing by using the first set of configuration parameters when the terminal is in the DRX on duration of DRX, and perform the partial sensing by using the second set of configuration parameters when the terminal is in the DRX inactive duration of DRX; or,

in a period from a sensing start time to a time of the initial transmission of the data, perform the partial sensing by using the first set of configuration parameters when the terminal is in the DRX on duration of DRX, and perform the partial sensing by using the second set of configuration parameters when the terminal is in the DRX inactive duration of DRX; or,

in a period from a sensing start time to a time of a last retransmission of the data, perform the partial sensing by using the first set of configuration parameters when the terminal is in the DRX on duration of DRX, and perform the partial sensing by using the second set of configuration parameters when the terminal is in the DRX inactive duration of DRX.

Optionally, the at least one set of partial sensing configuration parameters includes a first set of configuration parameters and a second set of configuration parameters, and the sensing unit is further configured to: perform, in a period from a sensing start time to a time of a data initial transmission, the partial sensing by using the first set of configuration parameters and the second set of configuration parameters.

Optionally, the sensing unit is further configured to: perform, in a period from the sensing start time to a time of a resource selection, the partial sensing by using the first set of configuration parameters, and performing, by the terminal in a period from the time of the resource selection to the time of the data initial transmission, the partial sensing by using the second set of configuration parameters; or,

perform, in a period from the sensing start time to a first time, the partial sensing by using the first set of configuration parameters, and performing, by the terminal in a period from the first time to the time of the data initial transmission, the partial sensing by using the second set of configuration parameters, where the first time is located before the time of the data initial transmission, and an interval between the first time and the time of the data initial transmission is a first preset duration f1.

Optionally, the at least one set of partial sensing configuration parameters includes a first set of configuration parameters and a second set of configuration parameters, and the sensing unit is further configured to: perform, in a period from a sensing start time to a time of a data retransmission, the partial sensing by using the first set of configuration parameters and the second set of configuration parameters.

Optionally, the sensing unit is further configured to perform, in a period from the sensing start time to a time of a resource selection, the partial sensing by using the first set of configuration parameters, and perform, in a period from the time of the resource selection to the time of the data retransmission, the partial sensing by using the second set of configuration parameters; or,

perform, in a period from the sensing start time to a second time, the partial sensing by using the first set of configuration parameters, and perform, in a period from the second time to a time of a last data retransmission, the partial sensing by using the second set of configuration parameters, where the second time is located before a time of a data initial transmission, and an interval between the second time and the time of the data initial transmission is a second preset duration f2.

Optionally, the at least one set of partial sensing configuration parameters only contains a first set of configuration parameters or a second set of configuration parameters, and the sensing unit is further configured to perform, in a period from a sensing start time to a time of a data initial transmission, the partial sensing by using the first set of configuration parameters or the second set of configuration parameters.

Optionally, the sensing unit is further configured to: perform, in a period from the sensing start time to a time of a resource selection, the partial sensing by using the first set of configuration parameters or the second set of configuration parameters, and perform, in a period from the time of the resource selection to the time of the data initial transmission, the partial sensing by continuing using the first set of configuration parameters or the second set of configuration parameters; or,

perform, in a period from the sensing start time to a third time, the partial sensing by using the first set of configuration parameters or the second set of configuration parameters, and perform, in a period from the third time to the time of the data initial transmission, the partial sensing by continuing using the first set of configuration parameters or the second set of configuration parameters, wherein the third time is located before the time of the data initial transmission, and an interval between the third time and the time of the data initial transmission is a third preset duration f3.

Optionally, the at least one set of partial sensing configuration parameters only contains a first set of configuration parameters or a second set of configuration parameters, and the sensing unit is further configured to: perform, in a period from a sensing start time to a time of a data retransmission, the partial sensing by using the first set of configuration parameters or the second set of configuration parameters.

Optionally, the sensing unit is further configured to: perform, in a period from the sensing start time to a time of a resource selection, the partial sensing by using the first set of configuration parameters or the second set of configuration parameters, and perform, in a period from the time of the resource selection to a time of a last data retransmission, the partial sensing by continuing using the first set of configuration parameters or the second set of configuration parameters; or,

perform, in a period from the sensing start time to a fourth time, the partial sensing by using the first set of configuration parameters or the second set of configuration parameters, and perform, in a period from the fourth time to a time of a last data retransmission, the partial sensing by continuing using the first set of configuration parameters or the second set of configuration parameters, wherein the fourth time is located before a time of a data initial transmission, and an interval between the fourth time and the time of the data initial transmission is a fourth preset duration f4.

Optionally, a sensing density of the first set of configuration parameters is lower than a sensing density of the second set of configuration parameters.

According to one aspect of the present disclosure, at least one embodiment provides a processor readable storage medium, the processor readable storage medium stores a computer program, and the computer program is configured to cause the processor to execute the method mentioned above.

Compared with related technologies, the partial sensing method and partial sensing device for a sidelink resource provided in the embodiments of the present disclosure can configure multiple sets of partial sensing configuration parameters for a transmission resource pool, so that a terminal can use different configuration parameters at different times to perform partial sensing operations in a subsequent time period, based on the different impacts of periodic transmission and non-periodic transmission on the reliability of resource selection. For example, during a time period of monitoring of a periodic transmission, a partial sensing operation with a low density is performed by using the first set of partial sensing configuration parameters, so as to ensure the energy-saving effect; during a time period of monitoring of a non-periodic transmission, a partial sensing operation with a high density is performed in a short time by using the second set of partial sensing configuration parameters, so as to ensure the reliability of a sensing result and to reduce the number of collisions between transmissions. Furthermore, in the case of using DRX for power saving, the embodiments of the present disclosure use two sets of configuration parameters for partial sensing, thereby resource collisions can be appropriately reduced while the effect of power saving is achieved.

BRIEF DESCRIPTION OF THE DRAWINGS

By reading the detailed description of the preferred implementations below, multiple other advantages and benefits will become clear to person of ordinary skills in the art. The accompanying drawings are only intended to illustrate the preferred implementations and are not considered as a limitation of the present disclosure. Throughout the drawings, a same component is represented by a same reference sign. In the accompanying drawings:

FIG. 1 is a schematic diagram of partial sensing in related technologies;
FIG. 2 is a schematic diagram of resource allocation re-evaluation in related technologies;
FIG. 3 is a flow chart of a partial sensing method for a sidelink resource in an embodiment of the present disclosure;
FIG. 4 to FIG. 14 are multiple schematic diagrams of partial sensing provided by embodiments of the present disclosure;
FIG. 15 is a schematic structural diagram of a terminal provided by an embodiment of the present disclosure; and

FIG. 16 is a schematic structural diagram of a terminal provided by another embodiment of the present disclosure.

DETAILED DESCRIPTION

Exemplary embodiments of the present disclosure will be described in more detail below with reference to the accompanying drawings. Although the exemplary embodiments of the present disclosure are illustrated in the accompanying drawings, it should be appreciated that the present disclosure can be implemented in various forms and should not be limited by the embodiments described here. On the contrary, these embodiments are provided in order to have a more thorough understanding of the present disclosure and to fully convey the scope of the present disclosure to those skilled in the art.

Terms "first", "second" and the like in the description and claims of the present disclosure are used to distinguish similar objects, without necessarily describing a specific sequence or order. It should be appreciated that the data used in this way can be interchanged in appropriate cases, so that the embodiments described herein can be implemented in an order other than that illustrated or described here, for example. In addition, terms "include" and "have" and any variant thereof are intended to cover nonexclusive inclusions. For example, a process, method, system, product or equipment including a series of steps or units is not limited to those steps or units which are clearly listed, but may include other steps or units which are not clearly listed or intrinsic to the process, the method, the product or the equipment. The term "and/or" as used in the description and claims refers to at least one of objects connected by the term.

The technology described in this specification is not limited to the NR system and long time evolution (Long Time Evolution, LTE)/ LTE-Advanced (LTE-Advanced, LTE-A) system, but also can be used in various wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA) and other systems. Terms "system" and "network" may be often interchangeably used. The CDMA system can implement wireless technologies such as CDMA2000 and universal terrestrial radio access (Universal Terrestrial Radio Access, UTRA). UTRA includes wideband CDMA (Wideband Code Division Multiple Access, WCDMA) and other CDMA variants. The TDMA system can implement wireless technologies such as global system for mobile communication (Global System for Mobile Communication, GSM). OFDMA systems can implement wireless technologies such as ultramobile broadband (UltraMobile Broadband, UMB), Evolution-UTRA (Evolution-UTRA, E-UTRA), IEEE 802.21 (Wi-Fi), IEEE 802.16 (WiMAX), IEEE 802.20, and Flash-OFDM. UTRA and E-UTRA are parts of universal mobile telecommunications system (Universal Mobile Telecommunications System, UMTS). LTE and higher layer LTE (such as LTE-A) are new UMTS versions using E-UTRA. UTRA, E-UTRA, UMTS, LTE, LTE-A, and GSM are described in literature from an organization called "3rd generation partnership project" (3rd Generation Partnership Project, 3GPP). CDMA2000 and UMB are described in literature from an organization called "3rd Generation Partnership Project 2" (3GPP2). The technology described in this specification can be used not only for the systems and radio technologies mentioned above, but also for other systems and radio technologies. Furthermore, the NR system is described in the following description for example purposes, and the NR terminology is used in most of the following description, although these techniques can also be applied to other applications except the NR system applications.

The following description provides examples rather than limiting the scope, applicability, or configuration set forth in the claims. Changes can be made to the functionality and arrangement of the discussed elements without departing from the spirit and scope of this disclosure. Various procedures or components can be appropriately omitted, replaced, or added in multiple examples. For example, the described method can be executed in an order that is different from the described order, and various steps can be added, omitted, or combined. In addition, features described with reference to a certain example can be combined in other examples.

In order to facilitate the understanding of this disclosure, the following is a brief explanation of some concepts that may be involved in this disclosure.

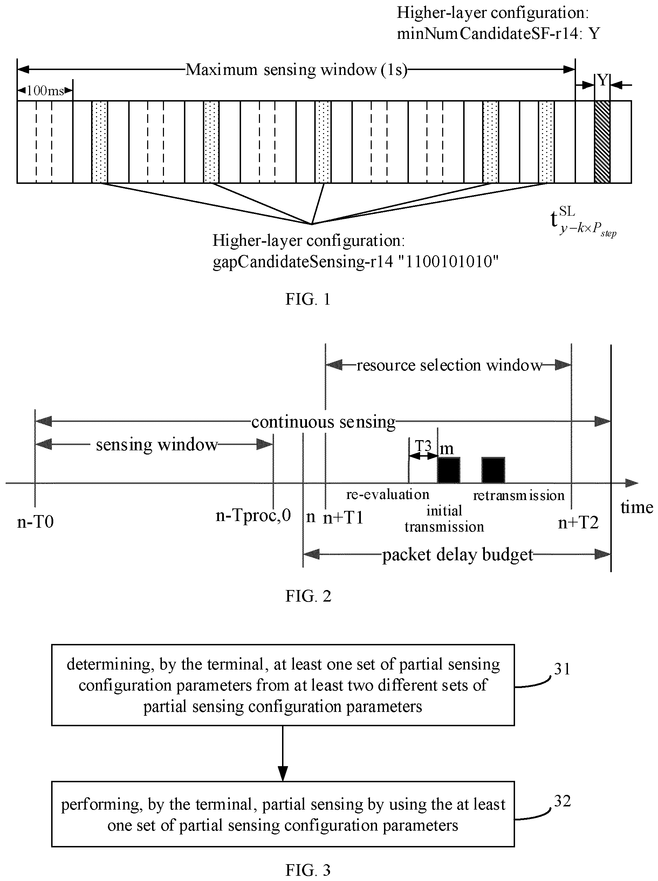

Partial sensing: the basic principle of partial sensing is that a terminal periodically performs sensing on a pre-selected resource set, and ultimately selects an available resource from the resource set. Specifically, the terminal itself determines a candidate reservation resource set consisting of at least Y subframes, the physical layer determines a sensing period $P_{step}$, and a higher layer configures a sequence of candidate sensing intervals for the physical layer, that is, a sequence being composed of 0 and 1, and having a length of 10 bits, where each of the bits corresponds to a sensing period. When a value of the bit in the sequence is 1, the terminal performs sensing at a time that is at a distance of $k \times P_{step}$ from the candidate reservation resource set, excludes unavailable resources, and finally selects an available subframe from the Y subframes, where k is an index value corresponding to a current bit of the sequence. FIG. 1 shows a schematic diagram of partial sensing, where a rectangular box filled with small dots represents a sensing period corresponding to a bit whose value is 1 in the sequence, and a dashed rectangular box represents a sensing period corresponding to a bit whose value is 0 in the sequence.

In Sidelink communications, LTE only includes periodic transmission, and a resource pool is configured with two variables: resource reservation interval and sensing period, where the terminal obtains a transmission period by multiplying the two variables, and performs partial sensing by using the sensing period as a variable. NR includes periodic transmission and non-periodic transmission, a resource pool is configured with a variable of resource reservation period, and the relevant standards only support continuous sensing, so there is no variable of sensing period. The terminal periodically sends initial transmission or retransmission of a service based on the resource reservation period, and the terminal does not use this variable during non-periodic transmission and only performs one operation for initial transmission or retransmission.

The mode2 resource allocation re-evaluation mechanism in relevant NR standards is that at a time m - T3 (m is a time for transmitting an initial transmission resource, and T3 is a transmission processing delay), the terminal uses a result of continuous sensing within a duration between a time n and the time m to determine whether there are other terminals transmitting a reserved resource during this period that collides with a resource selected by the terminal at the time n, where n is a time when a service arrives and a resource is selected. The terminal excludes the colliding resource, and reselects a resource. FIG. 2 shows a schematic diagram of re-evaluation.

The discontinuous reception (DRX) mechanism in relevant NR is mainly aimed at reducing the quantity of monitoring of physical downlink control channel (Physical Downlink Control Channel, PDCCH) to achieve the goal of power saving. The main operation is to receive PDCCH in an active state (DRX on duration) and not to receive PDCCH in an inactive state (DRX inactive duration). DRX may be introduced into Sidelink in a power saving mechanism in future versions.

As mentioned above, in the relevant NR standards, re-evaluation operations are only performed before the initial transmission, and there is no re-evaluation operation before the retransmission. The re-evaluation part uses a result obtained by continuous sensing. If a partial sensing operation in the LTE standard is applied to the sensing of a re-evaluation operation in the NR standards for energy-saving purposes, the reliability of sensing for non-periodic transmission may be reduced.

Currently, NR V2X standards do not support partial sensing. If a partial sensing mechanism is introduced into NR V2X system for energy-saving purposes and a similar configuration method as LTE is used, that is, one transmission resource pool is configured with one set of partial sensing configuration parameters, and the terminal will use the same set of partial sensing configuration in the partial sensing process of one or multiple service transmissions. However, at different times, periodic transmission and non-periodic transmission have different impacts on the reliability of resource selection. A periodic transmission of another terminal can be more effectively sensed before a transmission cycle of resource selection triggering. The sensing density configured for energy conservation purposes can be lower. During the transmission cycle before and after resource selection triggering, and before the initial transmission of a service, resource selection may be affected by non-periodic retransmissions from other terminals. If sensing is carried out according to the lower-density sensing configuration as same as before, the non-periodic service as sensed will be very limited, and the reliability of the selected resource or re-evaluation result will be reduced.

Embodiments of the present disclosure provide a partial sensing method that can support different configuration parameters for partial sensing operations, thereby improving the flexibility of partial sensing operations. For example, different partial sensing configuration parameters can be used at different times. Specifically, the embodiment of the present disclosure can configure multiple sets of partial sensing configuration parameters based on the levels of sensing densities. The terminal decides to use one or more sets of partial sensing configuration parameters based on implementation or (preconfiguration) configuration, so that an appropriate partial sensing configuration parameter can be selected according to needs, which is beneficial for energy conservation of a terminal and improves the robustness of the partial sensing.

Referring to FIG. 3, a partial sensing method for a sidelink resource provided by an embodiment of the present disclosure is executed by a terminal, which specifically includes:

step 31, determining, by the terminal, at least one set of partial sensing configuration parameters from at least two different sets of partial sensing configuration parameters.

The terminal side obtains, in advance, at least two sets of partial sensing configuration parameters configured for a transmission resource pool, and multiple sets of partial sensing configuration parameters have different parameters, for example, various sets of partial sensing configuration parameters have different sensing densities. Each set of partial sensing configuration parameters typically includes the following parameters: a minimum quantity of candidate resources and a bit sequence of candidate sensing intervals. The above bit sequence usually has a preset length, such as 10 bits, each bit corresponding to a sensing period. When a value of the bit is 1, it indicates that the sensing is performed in a moment that is $k \times P_{step}$ away from a reserved resource set, unavailable resources are excluded, and finally, an available subframe is selected from Y subframes, where k is an index value corresponding to the bit, $P_{step}$ is the sensing period, and Y is the minimum quantity of the candidate resources.

In addition, in an embodiment of the present disclosure, the at least two sets of partial sensing configuration parameters may be pre-stored locally on the terminal, or the terminal may receive configuration information sent by a network to obtain the at least two sets of partial sensing configuration parameters.

Step 32: performing, by the terminal, partial sensing by using the at least one set of partial sensing configuration parameters.

The terminal performs the partial sensing of the sidelink resource based on the partial sensing configuration parameters determined in step 31. The specific sensing method can refer to relevant technologies, which will not be described in the embodiments of the present disclosure.

Based on the above steps, the embodiment of the present disclosure provides multiple sets of partial sensing configuration parameters, which can support the terminal to perform partial sensing by using different parameters for partial sensing operations. For example, different partial sensing configuration parameters can be used according to different times. Thus, the flexibility of partial sensing operations can be improved.

Subsequent to the above step 32, the terminal can perform initial transmission and/or retransmission of data based on a sensing result obtained from the partial sensing. The retransmission may include one or multiple retransmissions, which respectively corresponds to one or multiple retransmission resources.

As an implementation manner, in an embodiment of the present disclosure, the at least two sets of partial sensing configuration parameters are configured according to the sizes of the sensing densities. In the above step 31, the at least one set of partial sensing configuration parameters determined by the terminal includes two sets of partial sensing configuration parameters, which are a first set of configuration parameters and a second set of configuration parameters, where a sensing density of the first set of configuration parameters is different from a sensing density of the second set of configuration parameters. Here, it is assumed that the sensing density of the first set of configuration parameters is lower than that of the second set of configuration parameters, that is, the number of bits whose value is 1 in the bit sequence of the candidate sensing intervals of the first set of configuration parameters is less than the number of bits whose value is 1 in the bit sequence of the candidate sensing intervals of the second set of configuration parameters. In this way, in the above step 32, the terminal uses the first set of configuration parameters and the second set of configuration parameters to perform the partial sensing, which may specifically include:

1) performing the partial sensing by using the first set of configuration parameters when the terminal is in a DRX on duration of DRX; and performing the partial sensing by using the second set of configuration parameters when the terminal is in a DRX inactive duration of DRX. That is, the terminal in different DRX states uses different configuration parameters to perform partial sensing, and multiple DRX states correspond to different configuration parameters.

For example, during a period from a sensing start time to a time of a resource selection, the terminal performs the partial sensing by using the first set of configuration parameters when the terminal is in the DRX on duration of DRX, and performs the partial sensing by using the second set of configuration parameters when the terminal is in the DRX inactive duration of DRX.

For another example, during a period from the sensing start time to a time of a data initial transmission, the terminal performs the partial sensing by using the first set of configuration parameters when the terminal is in the DRX on duration of DRX, and performs the partial sensing by using the second set of configuration parameters when the terminal is in the DRX inactive duration of DRX.

For another example, during a period from the sensing start time to a time of the last data retransmission, the terminal performs the partial sensing by using the first set of configuration parameters when the terminal is in the DRX on duration of DRX, and performs the partial sensing by using the second set of configuration parameters when the terminal is in the DRX inactive duration of DRX.

2) Performing, by the terminal in a period from a sensing start time to a time of a data initial transmission, the partial sensing by using the first set of configuration parameters and the second set of configuration parameters.

For example, the terminal performs the partial sensing by using the first set of configuration parameters during a period from a sensing start time to a time of a resource selection, and performs the partial sensing by using the second set of configuration parameters during a period from the time of the resource selection to the time of the data initial transmission.

For another example, the terminal performs the partial sensing by using the first set of configuration parameters during a period from the sensing start time to a first time, and performs the partial sensing by using the second set of configuration parameters during a period from the first time to the time of the data initial transmission, where the first time is located before the time of the data initial transmission, and an interval between the first time and the time of the data initial transmission is a first preset duration f1. Considering the characteristics of current periodic transmission and non-periodic transmission, the first preset duration f1 herein may be 31 slots.

3) Performing, by the terminal in a period from a sensing start time to a time of a data retransmission, the partial sensing by using the first set of configuration parameters and the second set of configuration parameters.

For example, the terminal performs the partial sensing by using the first set of configuration parameters during a period from a sensing start time to a time of a resource selection, and performs the partial sensing by using the second set of configuration parameters during a period from the time of the resource selection to the time of the data retransmission.

For another example, the terminal performs the partial sensing by using the first set of configuration parameters during a period from the sensing start time to a second time, and performs the partial sensing by using the second set of configuration parameters during a period from the second time to a time of the last data retransmission, where the second time is located before the time of the data initial transmission, and an interval between the second time and the time of the data initial transmission is a second preset duration f2. Considering the characteristics of current periodic transmission and non-periodic transmission, the second preset duration f2 herein may be 31 slots.

It can be seen from the above that, in the embodiments of the present disclosure, multiple sets of partial sensing configuration parameters are configured for a transmission resource pool, and the terminal can use different configuration parameters at different times to perform partial sensing operations in a subsequent time period, based on the impacts of periodic transmission and non-periodic transmission on the reliability of resource selection. For example, during a time period of monitoring of a periodic transmission, a partial sensing operation with a low density is performed by using the first set of partial sensing configuration parameters, so as to ensure the energy-saving effect; during a time period of monitoring of a non-periodic transmission, a partial sensing operation with a high density is performed in a short time by using the second set of partial sensing configuration parameters, so as to ensure the reliability of a sensing result and to reduce the number of collisions between transmissions. Furthermore, in the case of using DRX for power saving, the embodiment of the present disclosure can use two sets of configuration parameters for partial sensing, which can appropriately reduce the number of resource collisions while achieving the effect of power saving.

As an implementation manner, in an embodiment of the present disclosure, at least two sets of partial sensing configuration parameters are configured according to the levels of the sensing densities. In the above step 31, the at least one set of partial sensing configuration parameters determined by the terminal is one set of partial sensing configuration parameters, which may be specifically the first set of configuration parameters or the second set of configuration parameters. In this way, in the above step 32, the terminal performs the partial sensing by using the first set of configuration parameters or the second set of configuration parameters. The sensing density of the first set of configuration parameters is different from that of the second set of configuration parameters. It is assumed that the sensing density of the first set of configuration parameters is lower than that of the second set of configuration parameters. Specifically, the performing the partial sensing by using the first set of configuration parameters or the second set of configuration parameters may include:

1) performing, by the terminal in a period from a sensing start time to a time of a data initial transmission, the partial sensing by using the first set of configuration parameters or the second set of configuration parameters.

For example, the terminal uses the first set of configuration parameters for the partial sensing during a period from the sensing start time to a time of a resource selection, and continues using the first set of configuration parameters for the partial sensing during a period from the time of the resource selection to a time of a data initial transmission. Alternatively, the terminal uses the second set of configuration parameters for the partial sensing during a period from the sensing start time to a time of a resource selection, and continues using the second set of configuration parameters for the partial sensing during a period from the time of the resource selection to a time of a data initial transmission.

For another example, the terminal uses the first set of configuration parameters for the partial sensing during a period from the sensing start time to the third time, and continues using the first set of configuration parameters for the partial sensing during a period from the third time to the time of the data initial transmission, where the third time is located before the time of the data initial transmission, and an interval between the third time and the time of the data initial transmission is a third preset duration f3. Alternatively, the terminal uses the second set of configuration parameters for the partial sensing during a period from the sensing start time to the third time, and continues using the second set of configuration parameters for the partial sensing during a period from the third time to the time of the data initial transmission, where the third time is located before the time of the data initial transmission, and an interval between the third time and the time of the data initial transmission is a third preset duration f3.

Considering the characteristics of current periodic transmission and non-periodic transmission, the third preset duration f3 here may be 31 slots.

2) Performing, by the terminal in a period from a sensing start time to a time of a data retransmission, the partial sensing by using the first set of configuration parameters or the second set of configuration parameters.

For example, the terminal uses the first set of configuration parameters for the partial sensing within a period from the sensing start time to a time of a resource selection, and continues using the first set of configuration parameters for the partial sensing within a period from the time of the resource selection to a time of the last data retransmission. Alternatively, the terminal uses the second set of configuration parameters for the partial sensing within a period from the sensing start time to the time of the resource selection, and continues using the second set of configuration parameters for the partial sensing within a period from the time of the resource selection to a time of the last data retransmission.

For another example, the terminal uses the first set of configuration parameters for the partial sensing within a period from the sensing start time to a fourth time, and continues using the first set of configuration parameters for the partial sensing within a period from the fourth time to a time of the last data retransmission. Alternatively, the terminal uses the second set of configuration parameters for the partial sensing within a period from the sensing start time to a fourth time, and continues using the second set of configuration parameters for the partial sensing within a period from the fourth time to the time of the last data retransmission, where the fourth time is located before a time of a data initial transmission, and an interval between the fourth time and the time of the data initial transmission is a fourth preset duration f4. The fourth time is located before the time of the data initial transmission, and the interval between the fourth time and the time of the data initial transmission is the fourth preset duration f4. By taking the characteristics of current periodic transmission and non-periodic transmission into consideration, the fourth preset duration f4 here may be 31 slots.

The method in the embodiments of the present disclosure will be further explained below based on multiple examples. The following examples include performing partial sensing by using two sets of configuration parameters, which may be further divided into the following items:

A. performing partial sensing by using two sets of configuration parameters in different DRX states;
B. performing partial sensing by using two sets of configuration parameters from the beginning of sensing until an initial transmission;
C. performing partial sensing by using two sets of configuration parameters from the beginning of sensing until a retransmission.
The following examples further include performing partial sensing by using one set of configuration parameters, which may be further divided into the following items:
D. performing partial sensing by using one set of parameters from the beginning of sensing until the initial transmission; and
E. performing partial sensing by using one set of parameters from the beginning of sensing until the retransmission.

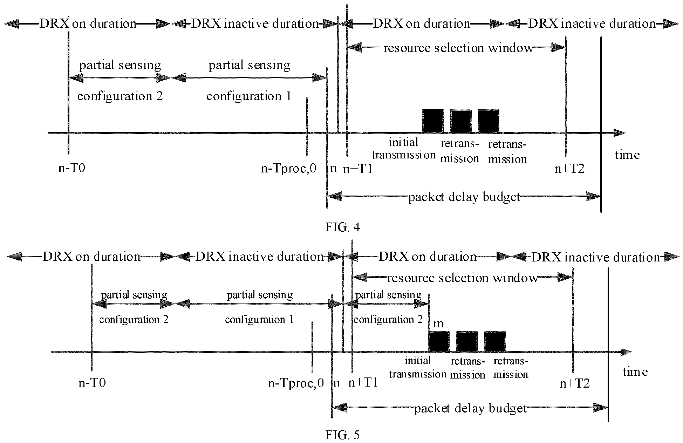

In the following examples and in FIG. 4 to FIG. 14, each candidate resource may be a subframe, or a slot, or other unit; n represents a time of a resource selection; N - T0 represents a start time of partial sensing before the resource selection; [n + T1, n + T2] represents a resource selection window; n - $T_{proc,0}$ represents a start time of processing a sensing result; m represents a start time of an initial transmission of data; r represents a start time of the last retransmission; y represents a starting time of partial sensing after the resource selection; p represents a period of the partial sensing; $t_y$ represents a slot corresponding to y; $t_{y+k \times p}$ represents a slot corresponding to $y + k \times p$ ; f represents a start time of partial sensing before the initial transmission; $t_f$ represents a slot corresponding to f; and $t_{f+k \times p}$ represents a slot corresponding to $f + k \times p$.

In addition, for convenience, sometimes "partial sensing configuration 1" or "configuration 1" is used in the following specification and the drawings to represent the first set of configuration parameters, and "partial sensing configuration 2" or "configuration 2" is used to represent the second set of configuration parameters.

A. Example of using two sets of partial sensing configuration parameters for corresponding DRX.

In the following three examples, the resource pool is configured with two sets of partial sensing configuration parameters. It is assumed that service transmission periods configured for the resource pool are 200ms and 300ms, and the following two sets of partial sensing configuration parameters are configured:

1) partial sensing configuration 1: the minimum quantity of candidate resources being 4, and the bit sequence of candidate sensing intervals being 1000100010 (the sensing density is low);

2) partial sensing configuration 2: the minimum quantity of candidate resources being 7, and the bit sequence of candidate sensing intervals being 1010101110 (the sensing density is high).

Example 1: referring to FIG. 4, from the beginning of sensing to a time of a resource selection, configuration 1 is used for partial sensing during the DRX inactive duration, and configuration 2 is used for partial sensing during the DRX on duration.

(1) The terminal selects a set of resources as candidate resources within the resource selection window [n+T1, n+T2].

(2) A higher layer of the terminal sends parameters such as the period p of partial sensing and partial sensing configuration 2 to the physical layer. The higher layer here may be radio resource control (Radio Resource Control, RRC) layer and/or media access control (Media Access Control, MAC) layer.

(3) The terminal starts partial sensing at time n - T0 based on the parameters such as the period p and the partial sensing configuration, and reports a sensing result to the higher layer.

(4) The DRX state of the terminal changes, and the higher layer sends parameters such as the period p of partial sensing and partial sensing configuration 1 to the physical layer. Here, the period p of partial sensing is a pre-defined or pre-configured parameter.

(5) The terminal performs partial sensing based on parameters such as the period p and the partial sensing configuration, and reports a sensing result to the higher layer.

(6) The terminal selects resources at the time n based on the previous partial sensing results to obtain time-frequency positions of an initial transmission resource and a retransmission resource.

Example 2: referring to FIG. 5, from the beginning of sensing to the data initial transmission, configuration 1 is used for partial sensing within the DRX inactive duration, and configuration 2 is used for partial sensing within the DRX on duration.

(1) The terminal selects a set of resources as candidate resources within the resource selection window [n+T1, n+T2].

(2) A higher layer of the terminal sends parameters such as the period p of partial sensing and partial sensing configuration 2 to the physical layer.

(3) The terminal starts partial sensing at time n - T0 based on parameters such as the period p and partial sensing configuration, and reports a sensing result to the higher layer.

(4) The DRX state of the terminal changes, and the higher layer sends parameters such as the period p of partial sensing and partial sensing configuration 1 to the physical layer.

(5) The terminal performs partial sensing based on the parameters such as the period p and the partial sensing configuration, and reports a sensing result to the higher layer.

(6) The terminal selects resources at time n based on the previous partial sensing results to obtain time-frequency positions of initial transmission resource and retransmission resource.

(7) If the quantity of slots between the time of the data initial transmission and the time n of the resource selection reaches a (pre-configured) configured threshold, the terminal may choose to perform partial sensing with a partial sensing configuration within a duration between the time n and the time of the initial transmission. The (pre-configured) configured threshold and whether to perform partial sensing are determined based on an implementation of the terminal.

(8) If the higher layer of the terminal receives an indication for performing partial sensing between the time n and the time of the initial transmission, it sends parameters such as a partial sensing period p (which may be an updated value) and partial sensing configuration 2 to the physical layer based on the DRX state.

(9) After receiving the parameters by the physical layer from the higher layer and having processed them, the terminal starts partial sensing based on parameters such as the partial sensing period p and partial sensing configuration 2, ends the partial sensing at the start time m of the initial transmission, and reports a sensing result to the higher layer.

The sensing method:

if $p \times c = m - y$, performing partial sensing at slots $t_{y+k \times p}$ starting from slot $t_y$, and ending the partial sensing at time m, where c is the quantity of bits in the bit sequence of candidate sensing intervals, and k is the index value of a bit whose value is 1 in the bit sequence of candidate sensing intervals;
if $p \times c > m - y$, performing partial sensing at slots $t_{y+k \times p}$ starting from slot $t_y$, and ending the partial sensing at time m, where c is the quantity of bits in the bit sequence of candidate sensing intervals, and k is the index value of a bit whose value is 1 in the bit sequence of candidate sensing intervals;
if $p \times c < m - y$, performing partial sensing at slots $t_{y+(k+c \times q) \times p}$ starting from slot $t_y$, updating the value of q to be the current value of q plus 1 each time when traversing the bit sequence of candidate sensing intervals once, traversing the bit sequence for Q times, and ending the partial sensing at time m, where c is the quantity of bits in the bit sequence of candidate sensing intervals, k is the index value of a bit whose value is 1 in the bit sequence of candidate sensing intervals, $q = 0, 1, ..., Q$, and

$$Q = \lfloor (m - y)/(p \times c) \rfloor.$$

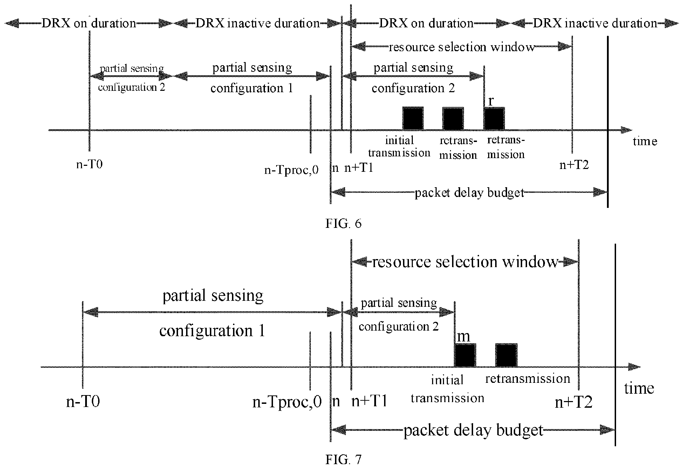

Example 3: referring to FIG. 6, from the beginning of sensing to a retransmission, configuration 1 is used for partial sensing in the DRX inactive duration, and use configuration 2 is used for partial sensing in the DRX on duration.

(1) The terminal selects a set of resources as candidate resources within the resource selection window [n+T1, n+T2].
(2) A higher layer of the terminal sends parameters such as the period p of partial sensing and partial sensing configuration 2 to the physical layer.
(3) The terminal starts partial sensing at time n - T0 based on the parameters such as the period p and the partial sensing configuration, and reports a sensing result to the higher layer.
(4) The DRX state of the terminal changes, and the higher layer sends parameters such as the period p of partial sensing and partial sensing configuration 1 to the physical layer.
(5) The terminal performs partial sensing based on parameters such as the period p and the partial sensing configuration, and reports a sensing result to the higher layer.
(6) The terminal selects resources at the time n based on the previous partial sensing results to obtain time-frequency positions of an initial transmission resource and a retransmission resource.
(7) If the quantity of slots between the time of the last retransmission and the time n of the resource selection reaches a (pre-configured) configured threshold, the terminal may choose to use the partial sensing configuration to perform partial sensing within a duration between the time n and the time of the last retransmission (the (pre-configured) configured threshold and whether to perform partial sensing are determined or implemented by the terminal).
(8) If the higher layer of the terminal receives an indication for performing partial sensing between the time n and the time of the initial transmission, it sends parameters such as partial sensing period p (which may be an updated value) and partial sensing configuration 2 to the physical layer based on the DRX state.
(9) After receiving the parameters by the physical layer from the higher layer, and having processed them, the terminal starts partial sensing based on the parameters such as the partial sensing period p and partial sensing configuration 2, ends the partial sensing at the start time r of the last retransmission, and reports a sensing result to the higher layer.

The sensing method:

if $p \times c = r - y$, performing partial sensing at slots $t_{y+k \times p}$ starting from slot $t_y$, and ending the partial sensing at time r, where c is the quantity of bits in the bit sequence of candidate sensing intervals, and k is the index value of a bit whose value is 1 in the bit sequence of candidate sensing intervals;
if $p \times c > r - y$, performing partial sensing at slots $t_{y+k \times p}$ starting from slot $t_y$, and ending the partial sensing at time r, where c is the quantity of bits in the bit sequence of candidate sensing intervals, and k is the index value of a bit whose value is 1 in the bit sequence of candidate sensing intervals;
if $p \times c < r - y$, performing partial sensing at slots $t_{y+(k+c \times q) \times p}$ starting from slot $t_y$, updating the value of q to be the current value of q plus 1 each time when traversing the bit sequence of candidate sensing intervals once, traversing the bit sequence for Q times, and ending the partial sensing at time r, where c is the quantity of bits in the bit sequence of candidate sensing intervals, k is the index value of a bit whose value is 1 in the bit sequence of candidate sensing intervals, $q = 0, 1, ..., Q$, and

$$Q = \lfloor (r - y)/(p \times c) \rfloor.$$

B. Example of using two sets of partial sensing configuration parameters from the beginning of sensing until an initial transmission.

In the following two examples, the resource pool is configured with two sets of partial sensing configuration parameters. It is assumed that service transmission periods configured for the resource pool are 200ms and 300ms, and the following two sets of partial sensing configuration parameters are configured:

> 1) partial sensing configuration 1: the minimum quantity of candidate resources being 4, and the bit sequence of candidate sensing intervals being 1000100010 (the sensing density is low);
> 2) partial sensing configuration 2: the minimum quantity of candidate resources being 7, and the bit sequence of candidate sensing intervals being 1010101110 (the sensing density is high).

Example 1: referring to FIG. 7, configuration 1 is used for partial sensing from the beginning of sensing until a resource selection, and configuration 2 is used for partial sensing from the resource selection until an initial transmission.

> (1) The terminal selects a set of resources as candidate resources within the resource selection window [n+T1, n+T2].
> (2) A higher layer of the terminal sends parameters such as the period p of partial sensing and partial sensing configuration 1 to the physical layer.
> (3) The terminal starts partial sensing at time n - T0 based on the parameters such as the period p and the partial sensing configuration, and reports a sensing result to the higher layer.
> (4) The terminal selects resources at time n based on the previous partial sensing result, to obtain time-frequency positions of an initial transmission resource and a retransmission resource.
> (5) If the quantity of slots between the time of the initial transmission and the time n of the resource selection reaches a (pre-configured) configured threshold, the terminal may choose to perform partial sensing with the partial sensing configuration within a duration between the time n and the time of the initial transmission (the (pre-configured) configured threshold and whether to perform partial sensing are determined based on an implementation of the terminal).
> (6) If the higher layer of the terminal receives an indication for performing partial sensing between the time n and the time of the initial transmission, it sends parameters such as partial sensing period p (which may be an updated value) and partial sensing configuration 2 to the physical layer.
> (7) After receiving the parameters by the physical layer from the higher layer, and having processed them, the terminal starts partial sensing based on parameters such as the partial sensing period p and partial sensing configuration 2, ends the partial sensing at the start time m of the initial transmission, and reports a sensing result to the higher layer.

The sensing method:

> if $p \times c = m - y$, performing partial sensing at slots $t_{y+k \times p}$ starting from slot $t_y$, and ending the partial sensing at time m, where c is the quantity of bits in the bit sequence of candidate sensing intervals, and k is the index value of a bit whose value is 1 in the bit sequence of candidate sensing intervals;
> if $p \times c > m - y$, performing partial sensing at slots $t_{y+k \times p}$ starting from slot $t_y$, and ending the partial sensing at time m, where c is the quantity of bits in the bit sequence of candidate sensing intervals, and k is the index value of a bit whose value is 1 in the bit sequence of candidate sensing intervals;
> if $p \times c < m - y$, performing partial sensing at slots $t_{y+(k+c \times q) \times p}$ starting from slot $t_y$, updating the value of q to be the current value of q plus 1 each time when traversing the bit sequence of candidate sensing intervals once, traversing the bit sequence for Q times, and ending the partial sensing at time m, where c is the quantity of bits in the bit sequence of candidate sensing intervals, k is the index value of a bit whose value is 1 in the bit sequence of candidate sensing intervals, q = 0,1, ..., Q, and
>
> $$Q = \lfloor (m - y)/(p \times c) \rfloor .$$

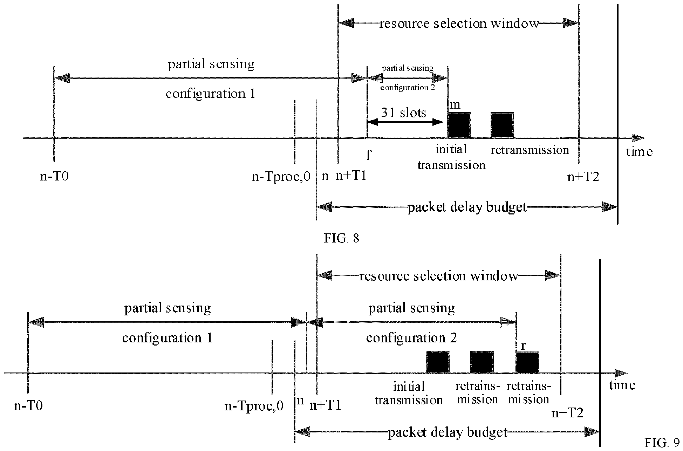

Example 2: referring to FIG. 8, partial sensing is performed by using configuration 1 within a duration from the beginning of sensing to a moment f before an initial transmission, and partial sensing is performed by using configuration 2 within a duration from the moment f before the initial transmission to a time of the initial transmission.

> (1) The terminal selects a set of resources as candidate resources within the resource selection window [n+T1, n+T2].
> (2) A higher layer of the terminal sends parameters such as the period p of partial sensing and partial sensing configuration 1 to the physical layer.
> (3) The terminal starts partial sensing at time n - T0 based on parameters such as the period p and the partial sensing configuration, and reports a sensing result to the higher layer.
> (4) The terminal selects resources at time n based on the previous partial sensing result to obtain time-frequency positions of an initial transmission resource and a retransmission resource.
> (5) If the quantity of slots between the time of the data initial transmission and the time n of the resource selection reaches a (pre-configured) configured threshold, the terminal may choose to perform partial sensing with a partial sensing configuration within a duration between the time n and the time of the initial transmission (the (pre-configured) configured threshold and whether to perform partial sensing are determined based on an implementation of the terminal).

(6) If the higher layer of the terminal receives an indication for performing partial sensing within a duration between the time n and the time of the initial transmission, it sends parameters such as a partial sensing period p (which may be an updated value) and partial sensing configuration 2 to the physical layer.

(7) The terminal performs partial sensing starting from a position where is 31 slots before the time m of the initial transmission based on parameters such as the partial sensing period p and partial sensing configuration 2, ends the partial sensing at the start time m of the initial transmission, and reports a sensing result to the higher layer.

The sensing method:

if $p \times c = m - f$, performing partial sensing at slots $t_{f+k \times p}$ starting from slot $t_f$, and ending the partial sensing at time m, where c is the quantity of bits in the bit sequence of candidate sensing intervals, and k is the index value of a bit whose value is 1 in the bit sequence of candidate sensing intervals;

if $p \times c > m - f$, performing partial sensing at slots $t_{f+k \times p}$ starting from slot $t_f$, and ending the partial sensing at time m, where c is the quantity of bits in the bit sequence of candidate sensing intervals, and k is the index value of a bit whose value is 1 in the bit sequence of candidate sensing intervals;

if $p \times c < m - f$, performing partial sensing at slots $t_{f+(k+c \times q) \times p}$ starting from slot $t_f$, updating the value of q to be the current value of q plus 1 each time when traversing the bit sequence of candidate sensing intervals once, traversing the bit sequence for Q times, and ending the partial sensing at time m, where c is the quantity of bits in the bit sequence of candidate sensing intervals, k is the index value of a bit whose value is 1 in the bit sequence of candidate sensing intervals, $q = 0, 1, ..., Q$, and

$$Q = \lfloor (m - f)/(p \times c) \rfloor .$$

C. Example of using two sets of partial sensing configurations from the beginning of sensing until a retransmission.

In the following two examples, the resource pool is configured with two sets of partial sensing configuration parameters. It is assumed that service transmission periods configured for the resource pool are 200ms and 300ms, the following two sets of partial sensing configuration parameters are configured:

1) partial sensing configuration 1: the minimum quantity of candidate resources being 4, and the bit sequence of candidate sensing intervals being 1000101010 (the sensing density is low);
2) partial sensing configuration 2: the minimum quantity of candidate resources being 7, and the bit sequence of candidate sensing intervals being 1010101110 (the sensing density is high).

Example 1: referring to FIG. 9, configuration 1 is used for partial sensing from the beginning of sensing until a resource selection, and configuration 2 is used for partial sensing from the resource selection until a retransmission.

(1) The terminal selects a set of resources as candidate resources within the resource selection window [n+T1, n+T2].
(2) A higher layer of the terminal sends parameters such as the period p of partial sensing and partial sensing configuration 1 to the physical layer.
(3) The terminal starts partial sensing at time n - T0 based on the parameters such as the period p and the partial sensing configuration, and reports a sensing result to the higher layer.
(4) The terminal selects resources at time n, based on the previous partial sensing result to obtain time-frequency positions of an initial transmission resource and a retransmission resource.
(5) If the quantity of slots between a time of the last retransmission and the time n of the resource selection reaches a (pre-configured) configured threshold, the terminal may choose to perform partial sensing with the partial sensing configuration within a duration between the time n and the time of the last retransmission (the (pre-configured) configured threshold and whether to perform partial sensing are determined based on an implementation of the terminal).
(6) If the higher layer of the terminal receives an indication for performing partial sensing between the time n and the time of the last retransmission, it sends parameters such as partial sensing period p (which may be an updated value) and partial sensing configuration 2 to the physical layer.
(7) After receiving the parameters by the physical layer from the higher layer, and having processed them, the terminal starts partial sensing based on parameters such as the partial sensing period p and partial sensing configuration 2, ends the partial sensing at the time r of the last retransmission, and reports a sensing result to the higher layer.

The sensing method:

if $p \times c = r - y$, performing partial sensing at slots $t_{y+k \times p}$ starting from slot $t_y$, and ending the partial sensing at time r, where c is the quantity of bits in the bit sequence of candidate sensing intervals, and k is the index value of a bit whose value is 1 in the bit sequence of candidate sensing intervals;

if $p \times c > r - y$, performing partial sensing at slots $t_{y+k \times p}$ starting from slot $t_y$, and ending the partial sensing at time r, where c is the quantity of bits in the bit sequence of candidate sensing intervals, and k is the index value of a bit whose value is 1 in the bit sequence of candidate sensing intervals;

if $p \times c < r - y$, performing partial sensing at slots $t_{y+(k+c \times q) \times p}$ starting from slot $t_y$, updating the value of q to be the current value of q plus 1 each time when traversing the bit sequence of candidate sensing intervals once, traversing the bit sequence for Q times, and ending the partial sensing at time r, where c is the quantity of bits in the bit sequence of candidate sensing intervals, k is the index value of a bit whose value is 1 in the bit sequence of candidate sensing intervals, q = 0,1, ..., Q, and

$$Q = \lfloor (r - y)/(p \times c) \rfloor.$$

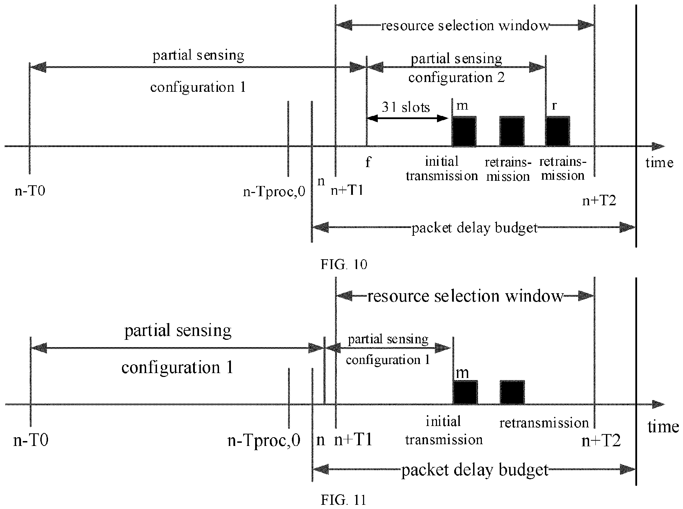

Example 2: referring to FIG. 10, partial sensing is performed by using configuration 1 within a duration from the beginning of sensing to a moment f before an initial transmission, and partial sensing is performed by using configuration 2 within a duration from the moment f before the initial transmission to a time of the last retransmission.

(1) The terminal selects a set of resources as candidate resources within the resource selection window [n+T1, n+T2].

(2) A higher layer of the terminal sends parameters such as the period p of partial sensing and partial sensing configuration 1 to the physical layer.

(3) The terminal starts partial sensing at time n - T0 based on the parameters such as the period p and the partial sensing configuration, and reports a sensing result to the higher layer.

(4) The terminal selects resources at time n, based on the previous partial sensing result to obtain time-frequency positions of an initial transmission resource and a retransmission resource.

(5) If the quantity of slots between the time of the last retransmission and the time n of the resource selection reaches a (pre-configured) configured threshold, the terminal may choose to perform partial sensing with a partial sensing configuration within a duration between the time n and the time of the last retransmission (the (pre-configured) configured threshold and whether to perform partial sensing are determined based on an implementation of the terminal).

(6) If the higher layer of the terminal receives an indication for performing partial sensing between the time n and the time of the last retransmission, it sends parameters such as partial sensing period p (which may be an updated value) and partial sensing configuration 2 to the physical layer.

(7) The terminal starts partial sensing at a position where is 31 slots before the time m of the initial transmission based on parameters such as the partial sensing period p and partial sensing configuration 2, ends the partial sensing at the time of the last retransmission, and reports a sensing result to the higher layer.

The sensing method:

if $p \times c = r - f$, performing partial sensing at slots $t_{f+k \times p}$ starting from slot $t_f$, and ending the partial sensing at time r, where c is the quantity of bits in the bit sequence of candidate sensing intervals, and k is the index value of a bit whose value is 1 in the bit sequence of candidate sensing intervals;

if $p \times c > r - f$, performing partial sensing at slots $t_{f+k \times p}$ starting from slot $t_f$, and ending the partial sensing at time r, where c is the quantity of bits in the bit sequence of candidate sensing intervals, and k is the index value of a bit whose value is 1 in the bit sequence of candidate sensing intervals;

if $p \times c < r - f$, performing partial sensing at slots $t_{f+(k+c \times q) \times p}$ starting from slot $t_f$, updating the value of q to be the current value of q plus 1 each time when traversing the bit sequence of candidate sensing intervals once, traversing the bit sequence for Q times, and ending the partial sensing at time r, where c is the quantity of bits in the bit sequence of candidate sensing intervals, k is the index value of a bit whose value is 1 in the bit sequence of candidate sensing intervals, q = 0,1, ..., Q, and

$$Q = \lfloor (r - f)/(p \times c) \rfloor.$$

D. Example of using one set of partial sensing configurations from the beginning of sensing until an initial transmission

In the following two examples, the resource pool is configured with two sets of partial sensing configuration parameters. It is assumed that service transmission periods configured for the resource pool are 200ms and 300ms, and the following two sets of partial sensing configuration parameters are configured:

1) partial sensing configuration 1: the minimum quantity of candidate resources being 5, and the bit sequence of candidate sensing intervals being 1000101010 (the sensing density is low);

2) partial sensing configuration 2: the minimum quantity of candidate resources being 5, and the bit sequence of candidate sensing intervals being 1010101110 (the sensing density is high).

Example 1: referring to FIG. 11, configuration 1 is used for partial sensing from the beginning of sensing until a resource selection, and configuration 2 is used for partial sensing from the resource selection until an initial transmission.

(1) The terminal selects a set of resources as candidate resources within the resource selection window [n+T1, n+T2].

(2) A higher layer of the terminal sends parameters such as the period p of partial sensing and partial sensing configuration 1 to the physical layer.

(3) The terminal starts partial sensing at time n - T0 based on the parameters such as the period p and the partial sensing configuration, and reports a sensing result to the higher layer.

(4) The terminal selects resources at time n based on the previous partial sensing result, to obtain time-frequency positions of an initial transmission resource and a retransmission resource.

(5) If the quantity of slots between the time of the initial transmission and the time n of the resource selection reaches a (pre-configured) configured threshold, the terminal may choose to perform partial sensing with a partial sensing configuration within a duration between the time n and the time of the initial transmission (the (pre-configured) configured threshold and whether to perform partial sensing are determined based on an implementation of the terminal).

(6) If the higher layer of the terminal receives an indication for performing partial sensing between the time n and the time of the initial transmission, it sends parameters such as partial sensing period p (which may be an updated value) and partial sensing configuration 1 to the physical layer.

(7) After receiving the parameters by the physical layer from the higher layer, and having processed them, the terminal starts partial sensing based on parameters such as the partial sensing period p and partial sensing configuration 1, ends the partial sensing at the start time m of the initial transmission, and reports a sensing result to the higher layer.

The sensing method:

if $p \times c = m - y$, performing partial sensing at slots $t_{y+k\times p}$ starting from slot $t_y$, and ending the partial sensing at time m, where c is the quantity of bits in the bit sequence of candidate sensing intervals, and k is the index value of a bit whose value is 1 in the bit sequence of candidate sensing intervals;

if $p \times c > m - y$, performing partial sensing at slots $t_{y+k\times p}$ starting from slot $t_y$, and ending the partial sensing at time m, where c is the quantity of bits in the bit sequence of candidate sensing intervals, and k is the index value of a bit whose value is 1 in the bit sequence of candidate sensing intervals;

if $p \times c < m - y$, performing partial sensing at slots

$t_{y+(k+c\times q)\times p}$ starting from slot $t_y$, updating the value of q to be the current value of q plus 1 each time when traversing the bit sequence of candidate sensing intervals once, traversing the bit sequence for Q times, and ending the partial sensing at time m, where c is the quantity of bits in the bit sequence of candidate sensing intervals, k is the index value of a bit whose value is 1 in the bit sequence of candidate sensing intervals, q = 0,1, ..., Q, and

$$Q = \lfloor (m - y)/(p \times c) \rfloor.$$

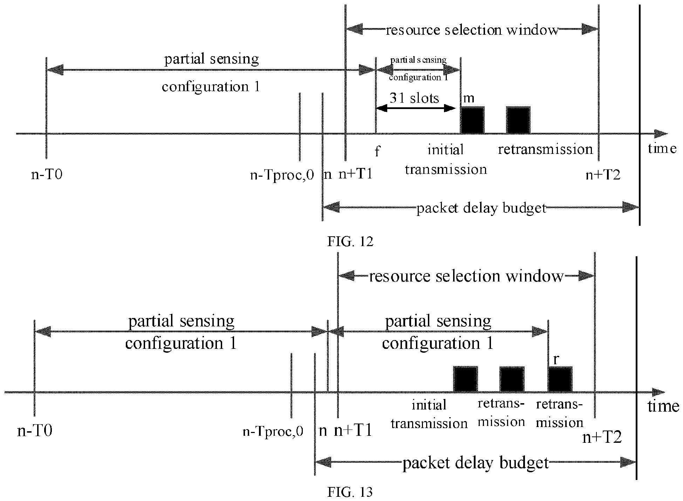

Example 2: referring to FIG. 12, partial sensing is performed by using configuration 1 within a duration from the beginning of sensing to a moment f before an initial transmission, and partial sensing is performed by using configuration 2 within a duration from the moment f before the initial transmission to a time of the initial transmission.

(1) The terminal selects a set of resources as candidate resources within the resource selection window [n+T1, n+T2].

(2) A higher layer of the terminal sends parameters such as the period p of partial sensing and partial sensing configuration 1 to the physical layer.

(3) The terminal starts partial sensing at time n - T0 based on parameters such as the period p and the partial sensing configuration, and reports a sensing result to the higher layer.

(4) The terminal selects resources at time n based on the previous partial sensing result to obtain time-frequency positions of an initial transmission resource and a retransmission resource.

(5) If the quantity of slots between the time of the data initial transmission and the time n of the resource selection reaches a (pre-configured) configured threshold, the terminal may choose to perform partial sensing with a partial sensing configuration within a duration between the time n and the time of the initial transmission (the (pre-configured) configured threshold and whether to perform partial sensing are determined based on an implementation of the terminal).

(6) If the higher layer of the terminal receives an indication for performing partial sensing within a duration between the time n and the time of the initial transmission, it sends parameters such as a partial sensing period p (which may be an updated value) and partial sensing configuration 1 to the physical layer.

(7) The terminal starts partial sensing at a position where is 31 slots before the time m of the initial transmission based on parameters such as the partial sensing period p and partial sensing configuration 1, ends the partial sensing at the start time m of the initial transmission, and reports a sensing result to the higher layer.

The sensing method:

if p × c = $m$ - f, performing partial sensing at slots $t_{f+k×p}$ starting from slot $t_f$, and ending the partial sensing at time m, where c is the quantity of bits in the bit sequence of candidate sensing intervals, and k is the index value of a bit whose value is 1 in the bit sequence of candidate sensing intervals;

if p × c > $m$ - f, performing partial sensing at slots $t_{f+k×p}$ starting from slot $t_f$, and ending the partial sensing at time m, where c is the quantity of bits in the bit sequence of candidate sensing intervals, and k is the index value of a bit whose value is 1 in the bit sequence of candidate sensing intervals;

if p × c < $m$ - f , performing partial sensing at slots $t_{f+(k+c×q)×p}$ starting from slot $t_f$, updating the value of q as the current value of q plus 1 each time when traversing the bit sequence of candidate sensing intervals once, traversing the bit sequence for Q times, and ending the partial sensing at time m, where c is the quantity of bits in the bit sequence of candidate sensing intervals, k is the index value of a bit whose value is 1 in the bit sequence of candidate sensing intervals, q = 0, 1, ..., Q, and

$$Q = \lfloor (m - f)/(p × c) \rfloor$$

.

E. Example of using one partial sensing configuration from the beginning of sensing until a retransmission.

In the following two examples, the resource pool is configured with two sets of partial sensing configuration parameters. Assuming that service transmission periods configured for the resource pool are 200ms and 300ms, the following two sets of partial sensing configuration parameters are configured:

1) partial sensing configuration 1: the minimum quantity of candidate resources being 5, and the bit sequence of candidate sensing intervals being 1000101010 (the sensing density is low);

2) partial sensing configuration 2: the minimum quantity of candidate resources being 5, and the bit sequence of candidate sensing intervals being 1010101110 (the sensing density is high).

Example 1: referring to FIG. 13, configuration 1 is used for partial sensing from the beginning of sensing to a time of a resource selection, and configuration 1 is used for partial sensing from the time of the resource selection to a time of the last retransmission.

(1) The terminal selects a set of resources as candidate resources within the resource selection window [n+T1, n+T2].

(2) A higher layer of the terminal sends parameters such as the period p of partial sensing and partial sensing configuration 2 to the physical layer.

(3) The terminal starts partial sensing at time n - T0 based on the parameters such as the period p and the partial sensing configuration, and reports a sensing result to the higher layer.

(4) The terminal selects resources at time n based on the previous partial sensing result, to obtain time-frequency positions of an initial transmission resource and a retransmission resource.

(5) If the quantity of slots between the time of the last retransmission and the time n of the resource selection reaches a (pre-configured) configured threshold, the terminal may choose to perform partial sensing with a partial sensing configuration within a duration between the time n and the time of the last retransmission (the (pre-configured) configured threshold and whether to perform partial sensing are determined based on an implementation of the terminal).

(6) If the higher layer of the terminal receives an indication for performing partial sensing between the time n and the time of the last retransmission, it sends parameters such as partial sensing period p (which may be an updated value) and partial sensing configuration 2 to the physical layer.

(7) After receiving the parameters by the physical layer from the higher layer, and having processed them, the terminal starts partial sensing based on parameters such as the partial sensing period p and partial sensing configuration 2, ends the partial sensing at a start time r of the last retransmission, and reports a sensing result to the higher layer.

The sensing method:

if p × c = r - y, performing partial sensing at slots $t_{y+k×p}$ starting from slot $t_y$, and ending the partial sensing at time r, where c is the quantity of bits in the bit sequence of candidate sensing intervals, and k is the index value of a bit whose value is 1 in the bit sequence of candidate sensing intervals;

if p × c > r - y, performing partial sensing at slots $t_{y+k×p}$ starting from slot $t_y$, and ending the partial sensing at time r, where c is the quantity of bits in the bit sequence of candidate sensing intervals, and k is the index value of a bit whose value is 1 in the bit sequence of candidate sensing intervals;

if p × c < r - y, performing partial sensing at slots $t_{y+(k+c×q)×p}$ starting from slot $t_y$, updating the value of q to be the current value of q plus 1 each time when traversing the bit sequence of candidate sensing intervals once, traversing the bit sequence for Q times, and ending the partial sensing at time r, where c is the quantity of bits in the bit sequence of candidate sensing intervals, k is the index value of a bit whose value is 1 in the bit sequence of candidate sensing intervals, q = 0, 1, ..., Q, and

$$Q = \lfloor (r - y)/(p \times c) \rfloor .$$

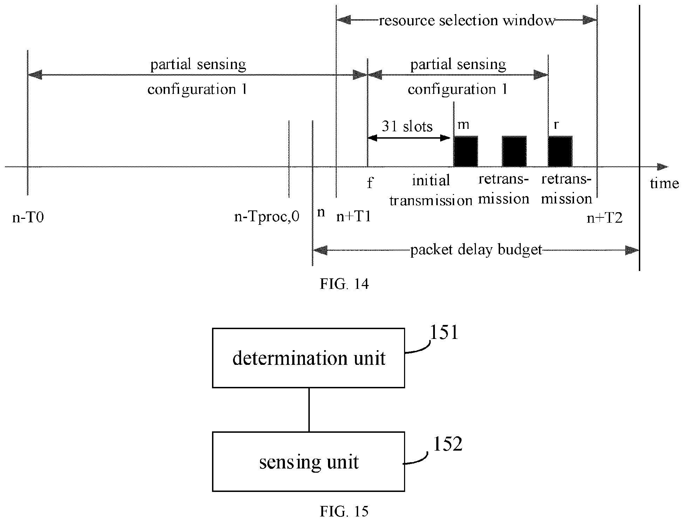

Example 2: referring to FIG. 14, partial sensing is performed by using configuration 1 within a duration from the beginning of sensing to a moment f before an initial transmission, and partial sensing is performed by using configuration 1 within a duration from the moment f before the initial transmission to a time of a retransmission.

(1) The terminal selects a set of resources as candidate resources within the resource selection window [n+T1, n+T2].
(2) A higher layer of the terminal sends parameters such as the period p of partial sensing and partial sensing configuration 1 to the physical layer.
(3) The terminal starts partial sensing at time n - T0 based on the parameters such as the period p and the partial sensing configuration, and reports a sensing result to the higher layer.
(4) The terminal selects resources at time n based on the previous partial sensing result, to obtain time-frequency positions of an initial transmission resource and a retransmission resource.
(5) If the quantity of slots between the time of the last retransmission and the time n of the resource selection reaches a (pre-configured) configured threshold, the terminal may choose to perform partial sensing with a partial sensing configuration within a duration between the time n and the time of the last retransmission (the (pre-configured) configured threshold and whether to perform partial sensing are determined based on an implementation of the terminal).
(6) If the higher layer of the terminal receives an indication for performing partial sensing between the time n and the time of the last retransmission, it sends parameters such as partial sensing period p (which may be an updated value) and partial sensing configuration 1 to the physical layer.
(7) The terminal starts partial sensing at a position where is 31 slots before the time m of the initial transmission based on parameters such as the partial sensing period p and partial sensing configuration 1, ends the partial sensing at the start time r of the last retransmission, and reports a sensing result to the higher layer.

The sensing method:

if p × c = r - f, performing partial sensing at slots $t_{f+k \times p}$ starting from slot $t_f$, and ending the partial sensing at time r, where c is the quantity of bits in the bit sequence of candidate sensing intervals, and k is the index value of a bit whose value is 1 in the bit sequence of candidate sensing intervals;
if p × c > r - f, performing partial sensing at slots $t_{f+k \times p}$ starting from slot $t_f$, and ending the partial sensing at time r, where c is the quantity of bits in the bit sequence of candidate sensing intervals, and k is the index value of a bit whose value is 1 in the bit sequence of candidate sensing intervals;
if p × c < r - f , performing partial sensing at slots $t_{f+(k+c \times q) \times p}$ starting from slot $t_f$, updating the value of q to be the current value of q plus 1 each time when traversing the bit sequence of candidate sensing intervals once, traversing the bit sequence for Q times, and ending the partial sensing at time r, where c is the quantity of bits in the bit sequence of candidate sensing intervals, k is the index value of a bit whose value is 1 in the bit sequence of candidate sensing intervals, q = 0,1, ..., Q, and

$$Q = \lfloor (r - f)/(p \times c) \rfloor .$$

The above introduces multiple methods of the embodiments of the present disclosure. The device for implementing the above methods will be further provided below.

Referring to FIG. 15, an embodiment of the present disclosure provides a terminal, which includes:

a determination unit 151, configured to determine at least one set of partial sensing configuration parameters from at least two different sets of partial sensing configuration parameters; and
a sensing unit 152, configured to perform partial sensing by using the at least one set of partial sensing configuration parameters.

Optionally, a sensing density of each set of partial sensing configuration parameters is different from a sensing density of each other set of partial sensing configuration parameters.

Optionally, each set of partial sensing configuration parameters includes the following parameters: a minimum quantity of candidate resources and a bit sequence of candidate sensing intervals.

Optionally, the terminal further includes a transmission unit, configured to perform initial transmission and/or retransmission of data based on a sensing result obtained from the partial sensing, after performing the partial sensing by using the at least one set of partial sensing configuration parameters.

Optionally, the at least one set of partial sensing configuration parameters includes a first set of configuration parameters and a second set of configuration parameters, and the sensing unit is configured to perform the partial sensing by using the first set of configuration parameters when the terminal is in a discontinuous reception (DRX) active state (DRX on duration); and performing the partial sensing by using the second set of configuration parameters when the terminal is in a DRX inactive state (DRX inactive duration).

Optionally, the sensing unit is further configured to:

in a period from a sensing start time to a time of a resource selection, perform the partial sensing by using the first set of configuration parameters when the terminal is in the DRX on duration of DRX, and perform the partial sensing by using the second set of configuration parameters when the terminal is in the DRX inactive duration of DRX; or,
in a period from a sensing start time to a time of the initial transmission of the data, perform the partial sensing by using the first set of configuration parameters when the terminal is in the DRX on duration of DRX, and perform the partial sensing by using the second set of configuration parameters when the terminal is in the DRX inactive duration of DRX; or,
in a period from a sensing start time to a time of a last retransmission of the data, perform the partial sensing by using the first set of configuration parameters when the terminal is in the DRX on duration of DRX, and perform the partial sensing by using the second set of configuration parameters when the terminal is in the DRX inactive duration of DRX.

Optionally, the at least one set of partial sensing configuration parameters includes a first set of configuration parameters and a second set of configuration parameters, and the sensing unit is further configured to: perform, in a period from a sensing start time to a time of a data initial transmission, the partial sensing by using the first set of configuration parameters and the second set of configuration parameters.

Optionally, the sensing unit is further configured to: perform, in a period from the sensing start time to a time of a resource selection, the partial sensing by using the first set of configuration parameters, and performing, by the terminal in a period from the time of the resource selection to the time of the data initial transmission, the partial sensing by using the second set of configuration parameters; or,
perform, in a period from the sensing start time to a first time, the partial sensing by using the first set of configuration parameters, and performing, by the terminal in a period from the first time to the time of the data initial transmission, the partial sensing by using the second set of configuration parameters, where the first time is located before the time of the data initial transmission, and an interval between the first time and the time of the data initial transmission is a first preset duration f1.

Optionally, the at least one set of partial sensing configuration parameters includes a first set of configuration parameters and a second set of configuration parameters, and the sensing unit is further configured to: perform, in a period from a sensing start time to a time of a data retransmission, the partial sensing by using the first set of configuration parameters and the second set of configuration parameters.

Optionally, the sensing unit is further configured to perform, in a period from the sensing start time to a time of a resource selection, the partial sensing by using the first set of configuration parameters, and perform, in a period from the time of the resource selection to the time of the data retransmission, the partial sensing by using the second set of configuration parameters; or,
perform, in a period from the sensing start time to a second time, the partial sensing by using the first set of configuration parameters, and perform, in a period from the second time to a time of a last data retransmission, the partial sensing by using the second set of configuration parameters, where the second time is located before a time of a data initial transmission, and an interval between the second time and the time of the data initial transmission is a second preset duration f2.

Optionally, the at least one set of partial sensing configuration parameters only contains a first set of configuration parameters or a second set of configuration parameters, and the sensing unit is further configured to perform, in a period from a sensing start time to a time of a data initial transmission, the partial sensing by using the first set of configuration parameters or the second set of configuration parameters.

Optionally, the sensing unit is further configured to: perform, in a period from the sensing start time to a time of a resource selection, the partial sensing by using the first set of configuration parameters or the second set of configuration parameters, and perform, in a period from the time of the resource selection to the time of the data initial transmission, the partial sensing by continuing using the first set of configuration parameters or the second set of configuration parameters; or,
perform, in a period from the sensing start time to a third time, the partial sensing by using the first set of configuration parameters or the second set of configuration parameters, and perform, in a period from the third time to the time of the data initial transmission, the partial sensing by continuing using the first set of configuration parameters or the second set of configuration parameters, wherein the third time is located before the time of the data initial transmission, and an interval between the third time and the time of the data initial transmission is a third preset duration f3.

Optionally, the at least one set of partial sensing configuration parameters only contains a first set of configuration parameters or a second set of configuration parameters, and the sensing unit is further configured to: perform, in a period from a sensing start time to a time of a data retransmission, the partial sensing by using the first set of configuration parameters or the second set of configuration parameters.

Optionally, the sensing unit is further configured to: perform, in a period from the sensing start time to a time of a resource selection, the partial sensing by using the first set of configuration parameters or the second set of configuration parameters, and perform, in a period from the time of the resource selection to a time of a last data retransmission, the partial sensing by continuing using the first set of configuration parameters or the second set of configuration parameters; or, perform, in a period from the sensing start time to a fourth time, the partial sensing by using the first set of configuration parameters or the second set of configuration parameters, and perform, in a period from the fourth time to a time of a last data retransmission, the partial sensing by continuing using the first set of configuration parameters or the second set of configuration parameters, wherein the fourth time is located before a time of a data initial transmission, and an interval between the fourth time and the time of the data initial transmission is a fourth preset duration f4.

Optionally, a sensing density of the first set of configuration parameters is lower than a sensing density of the second set of configuration parameters.

It should be noted that the device in this embodiment corresponds to the method shown in FIG. 3 above, and the implementation manners in multiple embodiments above are applicable to the embodiments of the device, which can also achieve the same technical effects. The above device provided in the embodiments of the present disclosure can achieve all steps of the method implemented in the above method embodiments, and can achieve the same technical effects. Therefore, the parts and beneficial effects of this embedment that are the same as the method embodiments will not be described in detail.

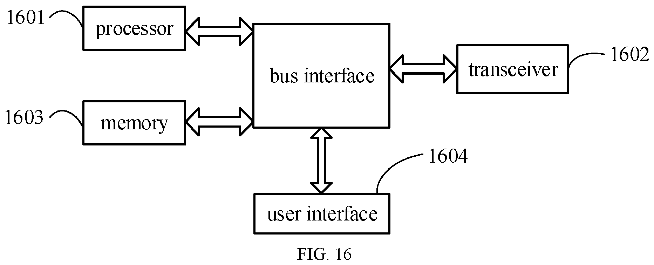

Reference is made to FIG. 16, which is a schematic structural diagram of a terminal provided in an embodiment of the present disclosure. The terminal includes: a processor 1601, a transceiver 1602, a memory 1603, a user interface 1604, and a bus interface.

In the embodiments of the present disclosure, the terminal further includes a program stored in memory 1603 and executable on processor 1601. The transceiver 1602 is configured to transmit and receive data under the control of the processor. The processor 1601 is configured to read the computer program in the memory and perform the following operations:

determining at least one set of partial sensing configuration parameters from at least two different sets of partial sensing configuration parameters; and performing partial sensing by using the at least one set of partial sensing configuration parameters.

Optionally, a sensing density of each set of partial sensing configuration parameters is different from a sensing density of each other set of partial sensing configuration parameters.

Optionally, each set of partial sensing configuration parameters includes the following parameters: a minimum quantity of candidate resources and a bit sequence of candidate sensing intervals.

Optionally, the processor is further configured to read the computer program in the memory and perform the following operations: performing initial transmission and/or retransmission of data based on a sensing result obtained from the partial sensing, after performing the partial sensing by using the at least one set of partial sensing configuration parameters.

Optionally, the at least one set of partial sensing configuration parameters includes a first set of configuration parameters and a second set of configuration parameters, and the processor is configured to read the computer program in the memory and perform the following operations: performing the partial sensing by using the first set of configuration parameters when the terminal is in a discontinuous reception (DRX) active state (DRX on duration); and performing the partial sensing by using the second set of configuration parameters when the terminal is in a DRX inactive state (DRX inactive duration).

Optionally, the at least one set of partial sensing configuration parameters includes a first set of configuration parameters and a second set of configuration parameters, and the processor is further configured to read the computer program in the memory and perform the following operations:

in a period from a sensing start time to a time of a resource selection, performing the partial sensing by using the first set of configuration parameters when the terminal is in the DRX on duration of DRX, and performing the partial sensing by using the second set of configuration parameters when the terminal is in the DRX inactive duration of DRX; or, in a period from a sensing start time to a time of the initial transmission of the data, performing the partial sensing by using the first set of configuration parameters when the terminal is in the DRX on duration of DRX, and performing the partial sensing by using the second set of configuration parameters when the terminal is in the DRX inactive duration of DRX; or, in a period from a sensing start time to a time of a last retransmission of the data, performing the partial sensing by using the first set of configuration parameters when the terminal is in the DRX on duration of DRX, and performing the partial sensing by using the second set of configuration parameters when the terminal is in the DRX inactive duration of DRX.

Optionally, the at least one set of partial sensing configuration parameters includes a first set of configuration parameters and a second set of configuration parameters, and the processor is configured to read the computer program in the memory and perform the following operations: performing, in a period from a sensing start time to a time of a data initial transmission, the partial sensing by using the first set of configuration parameters and the second set of configuration parameters.

Optionally, the processor is further configured to read the computer program in the memory and perform the following operations:

performing, in a period from the sensing start time to a time of a resource selection, the partial sensing by using the first set of configuration parameters, and performing, in a period from the time of the resource selection to the time of the data initial transmission, the partial sensing by using the second set of configuration parameters; or,

performing, in a period from the sensing start time to a first time, the partial sensing by using the first set of configuration parameters, and performing, in a period from the first time to the time of the data initial transmission, the partial sensing by using the second set of configuration parameters, where the first time is located before the time of the data initial transmission, and an interval between the first time and the time of the data initial transmission is a first preset duration f1.

Optionally, the at least one set of partial sensing configuration parameters includes a first set of configuration parameters and a second set of configuration parameters, and the processor is configured to read the computer program in the memory and perform the following operations: performing in a period from a sensing start time to a time of a data retransmission, the partial sensing by using the first set of configuration parameters and the second set of configuration parameters.

Optionally, the processor is further configured to read the computer program in the memory and perform the following operations:

performing, in a period from the sensing start time to a time of a resource selection, the partial sensing by using the first set of configuration parameters, and performing, in a period from the time of the resource selection to the time of the data retransmission, the partial sensing by using the second set of configuration parameters; or,

performing, in a period from the sensing start time to a second time, the partial sensing by using the first set of configuration parameters, and performing, in a period from the second time to a time of a last data retransmission, the partial sensing by using the second set of configuration parameters, where the second time is located before a time of a data initial transmission, and an interval between the second time and the time of the data initial transmission is a second preset duration f2.

Optionally, the at least one set of partial sensing configuration parameters only contains a first set of configuration parameters or a second set of configuration parameters, and the processor is configured to read the computer program in the memory and perform the following operations: performing, in a period from a sensing start time to a time of a data initial transmission, the partial sensing by using the first set of configuration parameters or the second set of configuration parameters.

Optionally, the processor is further configured to read the computer program in the memory and perform the following operations:

performing, in a period from the sensing start time to a time of a resource selection, the partial sensing by using the first set of configuration parameters or the second set of configuration parameters, and performing, in a period from the time of the resource selection to the time of the data initial transmission, the partial sensing by continuing using the first set of configuration parameters or the second set of configuration parameters; or,

performing, in a period from the sensing start time to a third time, the partial sensing by using the first set of configuration parameters or the second set of configuration parameters, and performing, in a period from the third time to the time of the data initial transmission, the partial sensing by continuing using the first set of configuration parameters or the second set of configuration parameters, wherein the third time is located before the time of the data initial transmission, and an interval between the third time and the time of the data initial transmission is a third preset duration f3.

Optionally, the at least one set of partial sensing configuration parameters only contains a first set of configuration parameters or a second set of configuration parameters, and the processor is configured to read the computer program in the memory and perform the following operations: performing, in a period from a sensing start time to a time of a data retransmission, the partial sensing by using the first set of configuration parameters or the second set of configuration parameters.

Optionally, the processor is further configured to read the computer program in the memory and perform the following operations:

performing, in a period from the sensing start time to a time of a resource selection, the partial sensing by using the first set of configuration parameters or the second set of configuration parameters, and performing, in a period from the time of the resource selection to a time of a last data retransmission, the partial sensing by continuing using the first set of configuration parameters or the second set of configuration parameters; or,

performing, in a period from the sensing start time to a fourth time, the partial sensing by using the first set of configuration parameters or the second set of configuration parameters, and performing, in a period from the fourth time to a time of a last data retransmission, the partial sensing by continuing using the first set of configuration parameters or the second set of configuration parameters, wherein the fourth time is located before a time of a data initial transmission, and an interval between the fourth time and the time of the data initial transmission is a fourth preset duration f4.

Optionally, a sensing density of the first set of configuration parameters is lower than a sensing density of the second set of configuration parameters.

It is understandable that in the embodiments of the present disclosure, the computer program can be executed by the processor 1601 to achieve multiple processes of the method embodiments shown in FIG. 3 above, and the same technical effects can be achieved, which will not be repeated herein to avoid repetition.

In FIG. 16, a bus architecture may include any number of interconnected buses and bridges, and connects various circuits including one or more processors represented by the processor 1601 and memory represented by the memory 1603. The bus architecture may also connect various other circuits such as peripherals, voltage regulators and power management circuits, which are well known in the art. Therefore, a detailed description thereof is omitted herein. A bus interface provides an interface. The transceiver 1602 may be multiple elements, such as a transmitter and a receiver, to allow for communication with various other apparatuses on the transmission medium. For different user equipment, the user interface 1604 may be an interface capable of externally or internally connecting a required device, and the connected device includes, but not limited to: a keypad, a display, a speaker, a microphone, a joystick.

The processor 1601 is responsible for supervising the bus architecture and normal operation and the memory 1603 may store the data being used by the processor 1601 during operation.

It should be noted that the device in this embodiment corresponds to the method shown in FIG. 3 above, and the implementation manners in all the embodiments are applicable to the embodiments of the device, which can also achieve the same technical effects. In this device, the transceiver 1602 and the memory 1603, or the transceiver 1602 and the processor 1601 can be communicatively connected through the bus interface. The functions of the processor 1601 can also be implemented by the transceiver 1602, and the functions of the transceiver 1602 can also be implemented by the processor 1601. It should be noted that the above device provided in the embodiments of the present disclosure can achieve all the method steps implemented in the above method embodiments, and can achieve the same technical effect. The parts and beneficial effects of this embedment that are the same as the method embodiments will not be described in detail.

In some embodiments of the present disclosure, a computer-readable storage medium is also provided, on which a program is stored. The program, when executed, causes the processor to implement the following steps:

determining at least one set of partial sensing configuration parameters from at least two different sets of partial sensing configuration parameters; and performing partial sensing by using the at least one set of partial sensing configuration parameters.

When the program is executed by the processor, the processor can implement all the implementation manners mentioned in the partial sensing method for a sidelink resource applied to the terminal side, and can achieve the same technical effect, which will not be repeated herein to avoid repetition.

Those skilled in the art may be aware that the units and algorithm steps of the examples described in conjunction with the embodiments disclosed in this specification can be implemented through electronic hardware, or a combination of computer software and electronic hardware. Whether these functions are executed by hardware or software depends on the specific application and design constraints of the technical solution. Those skilled in the art may implement the described functions by using different methods for each particular application, and such implementation should not be considered beyond the scope of the present disclosure.

Those skilled in the art may clearly understand that, for the convenience and brevity of the description, the specific working process of the above-described system, apparatus and unit can refer to the corresponding process in the foregoing method embodiments, which will not be repeated herein.

In the embodiments provided in the present disclosure, it should be understood that the disclosed apparatuses and methods may be implemented in other ways. For example, the apparatus embodiments described above are only illustrative. For example, the division of the units is only a logical function division. In actual implementation, there may be other division methods. For example, multiple units or components can be combined or may be integrated into another system, or some features may be ignored, or not implemented. In another point, the mutual coupling or direct coupling or communications connection shown or discussed may be achieved through some interfaces, and the indirect coupling or communications connection of apparatuses or units may be in electrical, mechanical or other forms.

The units described as separate components may or may not be physically separated, and the components shown as units may or may not be physical units, that is, they may be located in one place, or may be distributed to multiple network units. Part or all of the units can be selected according to actual needs to achieve the purpose of the solution of the embodiment of the present disclosure.

In addition, multiple functional units in multiple embodiments of the present disclosure may be integrated into one processing unit, each unit may exist separately physically, or two or more units may be integrated into one unit.

If the functions described above are realized in the form of software function units and sold or used as independent products, they can be stored in a computer-readable storage medium. Based on this understanding, the essential technical solution of the present disclosure, or the part that contributes to the prior art, or the part of the technical solution can be embodied in the form of a software product, and the computer software product is stored in a storage medium, and includes several instructions for enabling a computer device (which may be a personal computer, a server, or a network device, etc.) to execute all or part of the steps of the methods described in various embodiments of the present disclosure. The aforementioned storage medium includes: various media capable of storing program codes such as U disk, mobile hard disk, read-only memory, (Read-Only Memory, ROM), random access memory (Random Access Memory, RAM), magnetic disk or optical disk.

The above embodiments are only specific implementations of this disclosure, but the scope of protection of this disclosure is not limited thereto. Changes or replacements made by any technical personnel familiar with the technical field within the technical scope of this disclosure shall fall within the scope of protection of this disclosure. Therefore, the protection scope of this disclosure should be based on the protection scope of the claims.

It should be noted that the division of modules is only a logical function division, and in actual implementation, all or some of the modules may be integrated on one physical entity, or may be physically separated. All these modules may be implemented by a software invoked by a processing element, or implemented by a hardware. Alternatively, some of these modules may be implemented by software invoked by a processing element, and some of these modules may be implemented by hardware. For example, the determining module may be a standalone processing element, or may be integrated in a certain chip of the foregoing apparatuses. In addition, the determining module may be stored in the memory of the foregoing apparatuses in form of program codes, and is invoked by a certain processing element of the foregoing apparatuses to implement the function of the determining module. Other modules may be implemented in a similar way. In addition, all or some of these modules may be integrated together, or may be implemented independently. The processing element may be a kind of integrated circuit having a signal processing capability. In implementation, various steps of the method or the various modules can be implemented through hardware integrated logic circuits in the processor element or instructions in the form of software.

For example, the various modules, units, subunits or sub-modules may be one or more integrated circuits configured to implement the above methods, e.g., one or more ASICs (Application Specific Integrated Circuit, ASIC), one or more DSPs (digital signal processor, DSP), one or more FPGAs (Field Programmable Gate Array, FPGA), or the like. For another example, when a certain module is implemented by program codes invoked by a processing element, the processing element may be a general-purpose processor, e.g., a CPU (Central Processing Unit, CPU) or other processor capable of invoking program codes. For yet another example, these modules may be integrated together and implemented in the form of a system-on-a-chip (system-on-a-chip, SOC).

Terms "first", "second" and the like in the specification and claims of this disclosure are adopted not to describe a specific sequence or order but to distinguish similar objects. It should be understood that data used like this may be interchanged under a proper condition for implementation of the embodiments of the disclosure described here in a sequence apart from those shown or described here. In addition, terms "include" and "have" and any variant thereof are intended to cover nonexclusive inclusions. For example, a process, method, system, product or equipment including a series of steps or units is not limited to those steps or units which are clearly listed, but may include other steps or units which are not clearly listed or intrinsic to the process, the method, the product or the equipment. In addition, the term "and/or" as used in the description and claims refers to at least one of objects connected by the term, for example, A and/or B and/or C represents seven possibilities: only A exists, only B exists, only C exists, both A and B exist, both B and C exist, both A and C exist, and all of A, B and C exist. Similarly, the expression "at least one of A or B" used in the description and claims should be construed as "only A exists, only B exists, or both A and B exist".

The embodiments of the present disclosure have been described above in conjunction with the accompanying drawings, but this disclosure is not limited to the specific embodiments mentioned above. The specific embodiments mentioned above are only illustrative and not restrictive. With the inspiration of this disclosure, a person of ordinary skill in the art can also make many forms without departing from the scope of the purpose and the claims of this disclosure, all of which shall fall within the protection of this disclosure.

## Claims

1. A partial sensing method for a sidelink resource, comprising:

    determining, by a terminal, at least one set of partial sensing configuration parameters from at least two different sets of partial sensing configuration parameters; and
    performing, by the terminal, partial sensing by using the at least one set of partial sensing configuration parameters.

2. The method according to claim 1, wherein a sensing density of each set of partial sensing configuration parameters is different from a sensing density of each other set of partial sensing configuration parameters.

3. The method according to claim 2, wherein each set of partial sensing configuration parameters comprises the following parameters: a minimum quantity of candidate resources and a bit sequence of candidate sensing intervals.

4. The method according to claim 2, wherein after performing the partial sensing by using the at least one set of partial sensing configuration parameters, the method further comprises:
performing initial transmission and/or retransmission of data based on a sensing result obtained from the partial sensing.

5. The method according to claim 1, wherein the at least one set of partial sensing configuration parameters comprises a first set of configuration parameters and a second set of configuration parameters, and the performing, by the terminal, the partial sensing by using the at least one set of partial sensing configuration parameters comprises:
performing the partial sensing by using the first set of configuration parameters when the terminal is in a discontinuous reception (DRX) active state (DRX on duration); and performing the partial sensing by using the second set of configuration parameters when the terminal is in a DRX inactive state (DRX inactive duration).

6. The method according to claim 5, wherein the performing the partial sensing by using the first set of configuration parameters when the terminal is in the discontinuous reception (DRX) active state (DRX on duration); and performing the partial sensing by using the second set of configuration parameters when the terminal is in the DRX inactive state (DRX inactive duration) specifically comprises:

in a period from a sensing start time to a time of a resource selection, performing the partial sensing by using the first set of configuration parameters when the terminal is in the DRX on duration of DRX, and performing the partial sensing by using the second set of configuration parameters when the terminal is in the DRX inactive duration of DRX;
or,
in a period from a sensing start time to a time of the initial transmission of the data, performing the partial sensing by using the first set of configuration parameters when the terminal is in the DRX on duration of DRX, and performing the partial sensing by using the second set of configuration parameters when the terminal is in the DRX inactive duration of DRX;
or,
in a period from a sensing start time to a time of a last retransmission of the data, performing the partial sensing by using the first set of configuration parameters when the terminal is in the DRX on duration of DRX, and performing the partial sensing by using the second set of configuration parameters when the terminal is in the DRX inactive duration of DRX.

7. The method according to claim 1, wherein the at least one set of partial sensing configuration parameters comprises a first set of configuration parameters and a second set of configuration parameters, and the performing, by the terminal, the partial sensing by using the at least one set of partial sensing configuration parameters comprises:
performing, by the terminal in a period from a sensing start time to a time of a data initial transmission, the partial sensing by using the first set of configuration parameters and the second set of configuration parameters.

8. The method according to claim 7, wherein the performing, by the terminal in the period from the sensing start time to the time of the data initial transmission, the partial sensing by using the first set of configuration parameters and the second set of configuration parameters specifically comprises:

performing, by the terminal in a period from the sensing start time to a time of a resource selection, the partial sensing by using the first set of configuration parameters, and performing, by the terminal in a period from the time of the resource selection to the time of the data initial transmission, the partial sensing by using the second set of configuration parameters;
or,
performing, by the terminal in a period from the sensing start time to a first time, the partial sensing by using the first set of configuration parameters, and performing, by the terminal in a period from the first time to the time of the data initial transmission, the partial sensing by using the second set of configuration parameters, wherein the first time is located before the time of the data initial transmission, and an interval between the first time and the time of the data initial transmission is a first preset duration f1.

9. The method according to claim 1, wherein the at least one set of partial sensing configuration parameters comprises a first set of configuration parameters and a second set of configuration parameters, and the performing, by the terminal, the partial sensing by using the at least one set of partial sensing configuration parameters comprises:

performing, by the terminal in a period from a sensing start time to a time of a data retransmission, the partial sensing by using the first set of configuration parameters and the second set of configuration parameters.

10. The method according to claim 9, wherein the performing, by the terminal in the period from the sensing start time to the time of the data retransmission, the partial sensing by using the first set of configuration parameters and the second set of configuration parameters specifically comprises:

performing, by the terminal in a period from the sensing start time to a time of a resource selection, the partial sensing by using the first set of configuration parameters, and performing, by the terminal in a period from the time of the resource selection to the time of the data retransmission, the partial sensing by using the second set of configuration parameters;
or,
performing, by the terminal in a period from the sensing start time to a second time, the partial sensing by using the first set of configuration parameters, and performing, by the terminal in a period from the second time to a time of a last data retransmission, the partial sensing by using the second set of configuration parameters, wherein the second time is located before a time of a data initial transmission, and an interval between the second time and the time of the data initial transmission is a second preset duration f2.

11. The method according to claim 1, wherein the at least one set of partial sensing configuration parameters only contains a first set of configuration parameters or a second set of configuration parameters, and the performing, by the terminal, the partial sensing by using the at least one set of partial sensing configuration parameters comprises:
performing, by the terminal in a period from a sensing start time to a time of a data initial transmission, the partial sensing by using the first set of configuration parameters or the second set of configuration parameters.

12. The method according to claim 11, wherein the performing, by the terminal in the period from the sensing start time to the time of the data initial transmission, the partial sensing by using the first set of configuration parameters or the second set of configuration

ration parameters specifically comprises:

performing, by the terminal in a period from the sensing start time to a time of a resource selection, the partial sensing by using the first set of configuration parameters, and performing, by the terminal in a period from the time of the resource selection to the time of the data initial transmission, the partial sensing by continuing using the first set of configuration parameters;
or,
performing, by the terminal in a period from the sensing start time to a time of a resource selection, the partial sensing by using the second set of configuration parameters, and performing, by the terminal in a period from the time of the resource selection to the time of the data initial transmission, the partial sensing by continuing using the second set of configuration parameters;
or,
performing, by the terminal in a period from the sensing start time to a third time, the partial sensing by using the first set of configuration parameters, and performing, by the terminal in a period from the third time to the time of the data initial transmission, the partial sensing by continuing using the first set of configuration parameters, wherein the third time is located before the time of the data initial transmission, and an interval between the third time and the time of the data initial transmission is a third preset duration f3;
or,
performing, by the terminal in a period from the sensing start time to a third time, the partial sensing by using the second set of configuration parameters, and performing, by the terminal in a period from the third time to the time of the data initial transmission, the partial sensing by continuing using the second set of configuration parameters, wherein the third time is located before the time of the data initial transmission, and an interval between the third time and the time of the data initial transmission is a third preset duration f3.

13. The method according to claim 1, wherein the at least one set of partial sensing configuration parameters only contains a first set of configuration parameters or a second set of configuration parameters, and the performing, by the terminal, the partial sensing by using the at least one set of partial sensing configuration parameters comprises:
performing, by the terminal in a period from a sensing start time to a time of a data retransmission, the partial sensing by using the first set of configuration parameters or the second set of configuration parameters.

**14.** The method according to claim 13, wherein the performing, by the terminal in the period from the sensing start time to the time of the data retransmission, the partial sensing by using the first set of configuration parameters or the second set of configuration parameters specifically comprises:

performing, by the terminal in a period from the sensing start time to a time of a resource selection, the partial sensing by using the first set of configuration parameters, and performing, by the terminal in a period from the time of the resource selection to a time of a last data retransmission, the partial sensing by continuing using the first set of configuration parameters;
or,
performing, by the terminal in a period from the sensing start time to a time of a resource selection, the partial sensing by using the second set of configuration parameters, and performing, by the terminal in a period from the time of the resource selection to a time of a last data retransmission, the partial sensing by continuing using the second set of configuration parameters;
or,
performing, by the terminal in a period from the sensing start time to a fourth time, the partial sensing by using the first set of configuration parameters, and performing, by the terminal in a period from the fourth time to a time of a last data retransmission, the partial sensing by continuing using the first set of configuration parameters, wherein the fourth time is located before a time of a data initial transmission, and an interval between the fourth time and the time of the data initial transmission is a fourth preset duration f4;
or,
performing, by the terminal in a period from the sensing start time to a fourth time, the partial sensing by using the second set of configuration parameters, and performing, by the terminal in a period from the fourth time to a time of a last data retransmission, the partial sensing by continuing using the second set of configuration parameters, wherein the fourth time is located before a time of a data initial transmission, and an interval between the fourth time and the time of the data initial transmission is a fourth preset duration f4.

**15.** The method according to any one of claims 5 to 14, wherein a sensing density of the first set of configuration parameters is lower than a sensing density of the second set of configuration parameters.

**16.** A terminal, comprising a memory, a transceiver and a processor, wherein:

the memory is configured to store a computer program;
the transceiver is configured to transmit and receive data under the control of the processor;
the processor is configured to read the computer program in the memory and perform the following operations:

determining at least one set of partial sensing configuration parameters from at least two different sets of partial sensing configuration parameters; and
performing partial sensing by using the at least one set of partial sensing configuration parameters.

**17.** The terminal according to claim 16, wherein a sensing density of each set of partial sensing configuration parameters is different from a sensing density of each other set of partial sensing configuration parameters.

**18.** The terminal according to claim 16, wherein the at least one set of partial sensing configuration parameters comprises a first set of configuration parameters and a second set of configuration parameters, and the processor is configured to read the computer program in the memory and perform the following operations:
performing the partial sensing by using the first set of configuration parameters when the terminal is in a discontinuous reception (DRX) active state (DRX on duration); and performing the partial sensing by using the second set of configuration parameters when the terminal is in a DRX inactive state (DRX inactive duration).

**19.** The terminal according to claim 16, wherein the at least one set of partial sensing configuration parameters comprises a first set of configuration parameters and a second set of configuration parameters, and the processor is configured to read the computer program in the memory and perform the following operations:
performing, in a period from a sensing start time to a time of a data initial transmission, the partial sensing by using the first set of configuration parameters and the second set of configuration parameters.

**20.** The terminal according to claim 16, wherein the at least one set of partial sensing configuration parameters comprises a first set of configuration parameters and a second set of configuration parameters, and the processor is configured to read the computer program in the memory and perform the following operations:
performing, in a period from a sensing start time to a time of a data retransmission, the partial sensing by using the first set of configuration parameters and the second set of configuration parameters.

21. The terminal according to claim 16, wherein the at least one set of partial sensing configuration parameters only contains a first set of configuration parameters or a second set of configuration parameters, and the processor is configured to read the computer program in the memory and perform the following operations:
performing, in a period from a sensing start time to a time of a data initial transmission, the partial sensing by using the first set of configuration parameters or the second set of configuration parameters.

22. The terminal according to claim 16, wherein the at least one set of partial sensing configuration parameters only contains a first set of configuration parameters or a second set of configuration parameters, and the processor is configured to read the computer program in the memory and perform the following operations:
performing, in a period from a sensing start time to a time of a data retransmission, the partial sensing by using the first set of configuration parameters or the second set of configuration parameters.

23. A terminal, comprising:

a determination unit, configured to determine at least one set of partial sensing configuration parameters from at least two different sets of partial sensing configuration parameters; and
a sensing unit, configured to perform partial sensing by using the at least one set of partial sensing configuration parameters.

24. The terminal according to claim 23, wherein a sensing density of each set of partial sensing configuration parameters is different from a sensing density of each other set of partial sensing configuration parameters.

25. The terminal according to claim 24, wherein each set of partial sensing configuration parameters comprises the following parameters: a minimum quantity of candidate resources and a bit sequence of candidate sensing intervals.

26. The terminal according to claim 24, further comprising:
a transmission unit, configured to perform initial transmission and/or retransmission of data based on a sensing result obtained from the partial sensing, after performing the partial sensing by using the at least one set of partial sensing configuration parameters.

27. The terminal according to claim 23, wherein the at least one set of partial sensing configuration parameters comprises a first set of configuration parameters and a second set of configuration parameters, and the sensing unit is further configured to perform the partial sensing by using the first set of configuration parameters when in a discontinuous reception (DRX) active state (DRX on duration), and to perform the partial sensing by using the second set of configuration parameters when in a DRX inactive state (DRX inactive duration).

28. The terminal according to claim 27, wherein the sensing unit is further configured to:

in a period from a sensing start time to a time of a resource selection, perform the partial sensing by using the first set of configuration parameters when in the DRX on duration of DRX, and perform the partial sensing by using the second set of configuration parameters when in the DRX inactive duration of DRX;
or,
in a period from a sensing start time to a time of the initial transmission of the data, perform the partial sensing by using the first set of configuration parameters when in the DRX on duration of DRX, and perform the partial sensing by using the second set of configuration parameters when in the DRX inactive duration of DRX;
or,
in a period from a sensing start time to a time of a last retransmission of the data, perform the partial sensing by using the first set of configuration parameters when in the DRX on duration of DRX, and perform the partial sensing by using the second set of configuration parameters when in the DRX inactive duration of DRX.

29. The terminal according to claim 23, wherein the at least one set of partial sensing configuration parameters comprises a first set of configuration parameters and a second set of configuration parameters, and the sensing unit is further configured to: perform, in a period from a sensing start time to a time of a data initial transmission, the partial sensing by using the first set of configuration parameters and the second set of configuration parameters.

30. The terminal according to claim 29, wherein the sensing unit is further configured to:

perform, in a period from the sensing start time to a time of a resource selection, the partial sensing by using the first set of configuration parameters, and perform, in a period from the time of the resource selection to the time of the data initial transmission, the partial sensing by using the second set of configuration parameters; or,

perform, in a period from the sensing start time to a first time, the partial sensing by using the first set of configuration parameters, and perform, in a period from the first time to the time of the data initial transmission, the partial sensing by using the second set of configuration parameters, wherein the first time is located before the time of the data initial transmission, and an interval between the first time and the time of the data initial transmission is a first preset duration f1.

31. The terminal according to claim 23, wherein the at least one set of partial sensing configuration parameters comprises a first set of configuration parameters and a second set of configuration parameters, and the sensing unit is further configured to: perform, in a period from a sensing start time to a time of a data retransmission, the partial sensing by using the first set of configuration parameters and the second set of configuration parameters.

32. The terminal according to claim 31, wherein the sensing unit is further configured to:

perform, in a period from the sensing start time to a time of a resource selection, the partial sensing by using the first set of configuration parameters, and perform, in a period from the time of the resource selection to the time of the data retransmission, the partial sensing by using the second set of configuration parameters; or,

perform, in a period from the sensing start time to a second time, the partial sensing by using the first set of configuration parameters, and perform, in a period from the second time to a time of a last data retransmission, the partial sensing by using the second set of configuration parameters, wherein the second time is located before a time of a data initial transmission, and an interval between the second time and the time of the data initial transmission is a second preset duration f2.

33. The terminal according to claim 23, wherein the at least one set of partial sensing configuration parameters only contains a first set of configuration parameters or a second set of configuration parameters, and the sensing unit is further configured to: perform, in a period from a sensing start time to a time of a data initial transmission, the partial sensing by using the first set of configuration parameters or the second set of configuration parameters.

34. The terminal according to claim 33, wherein the sensing unit is further configured to:

perform, in a period from the sensing start time to a time of a resource selection, the partial sensing by using the first set of configuration parameters or the second set of configuration parameters, and perform, in a period from the time of the resource selection to the time of the data initial transmission, the partial sensing by continuing using the first set of configuration parameters or the second set of configuration parameters; or,

perform, in a period from the sensing start time to a third time, the partial sensing by using the first set of configuration parameters or the second set of configuration parameters, and perform, in a period from the third time to the time of the data initial transmission, the partial sensing by continuing using the first set of configuration parameters or the second set of configuration parameters, wherein the third time is located before the time of the data initial transmission, and an interval between the third time and the time of the data initial transmission is a third preset duration f3.

35. The terminal according to claim 23, wherein the at least one set of partial sensing configuration parameters only contains a first set of configuration parameters or a second set of configuration parameters, and the sensing unit is further configured to perform, in a period from a sensing start time to a time of a data retransmission, the partial sensing by using the first set of configuration parameters or the second set of configuration parameters.

36. The terminal according to claim 35, wherein the sensing unit is further configured to:

perform, in a period from the sensing start time to a time of a resource selection, the partial sensing by using the first set of configuration parameters or the second set of configuration parameters, and perform, in a period from the time of the resource selection to a time of a last data retransmission, the partial sensing by continuing using the first set of configuration parameters or the second set of configuration parameters; or,

perform, in a period from the sensing start time to a fourth time, the partial sensing by using the first set of configuration parameters or the second set of configuration parameters, and perform, in a period from the fourth time to a time of a last data retransmission, the partial sensing by continuing using the first set of configuration parameters or the second set of configuration parameters, wherein the fourth time is located before a time of a data initial transmission, and an interval between the fourth time and the time of the data initial transmission is a fourth preset duration f4.

**37.** The terminal according to any one of claims 27 to 36, wherein a sensing density of the first set of configuration parameters is lower than a sensing density of the second set of configuration parameters.

**38.** A processor readable storage medium, wherein the processor readable storage medium stores a computer program, and the computer program is configured to cause the processor to execute the method according to any one of claims 1 to 15.

Higher-layer configuration:
minNumCandidateSF-r14: Y

Maximum sensing window (1s)

100ms

Y

$$t^{SL}_{y-k \times P_{step}}$$

Higher-layer configuration:
gapCandidateSensing-r14 "1100101010"

FIG. 1

resource selection window

continuous sensing

sensing window

T3 m

re-evaluation    retransmission

initial
transmission

n-T0          n-Tproc,0    n  n+T1                                    n+T2        time

packet delay budget

FIG. 2

determining, by the terminal, at least one set of partial sensing
configuration parameters from at least two different sets of
partial sensing configuration parameters — 31

performing, by the terminal, partial sensing by using the at least
one set of partial sensing configuration parameters — 32

FIG. 3

←———DRX on duration———→ ←—DRX inactive duration—→ ←—DRX on duration———→ ←—DRX inactive duration—→

←——resource selection window——→

←—partial sensing—→ ←—partial sensing—→

configuration 2        configuration 1

initial        retrans-    retrans-
transmission   mission     mission

n-T0                    n-Tproc,0   n  n+T1                                    n+T2        time

←————————packet delay budget————————→

FIG. 4

←———DRX on duration———→ ←—DRX inactive duration—→ ←—DRX on duration———→ ←—DRX inactive duration—→

←——resource selection window——→

←partial sensing→ ←———partial sensing———→ partial sensing

configuration 2      configuration 1        configuration 2

m

initial        retrans-    retrans-
transmission   mission     mission

n-T0                    n-Tproc,0  n  n+T1                                    n+T2        time

←————————packet delay budget————————→

FIG. 5

←——DRX on duration——→ ←—DRX inactive duration—→ ←——DRX on duration——→ ←—DRX inactive duration—→

←——resource selection window——→

partial sensing partial sensing partial sensing
configuration 2 configuration 1 configuration 2

r

initial retrans- retrans-
transmission mission mission

time

n-T0

n-Tproc,0 n n+T1 n+T2

←———————packet delay budget———————→

FIG. 6

←resource selection window→

partial sensing partial sensing

configuration 1 configuration 2

m

initial retransmission
transmission

n-T0 n-Tproc,0 n n+T1 n+T2 time

←———————packet delay budget———————→

FIG. 7

resource selection window

partial sensing

configuration 1

partial sensing
configuration 2

31 slots

m

initial
transmission

retransmission

time

n-T0

n-Tproc,0 | n n+T1

f

n+T2

packet delay budget

FIG. 8

resource selection window

partial sensing

configuration 1

partial sensing

configuration 2

r

initial
transmission

retrains-
mission

retrains-
mission

time

n-T0

n-Tproc,0

n n+T1

n+T2

packet delay budget

FIG. 9

FIG. 10

FIG. 11

resource selection window

partial sensing
configuration 1

partial sensing
configuration 1

31 slots

m

f          initial          retransmission          time
n-T0                    n-Tproc,0  n n+T1      transmission                    n+T2

packet delay budget

FIG. 12

resource selection window

partial sensing
configuration 1

partial sensing
configuration 1

r

initial          retrans-  retrans-          time
transmission  mission   mission
n-T0                    n-Tproc,0  n n+T1                                    n+T2

packet delay budget

FIG. 13

FIG. 14

FIG. 15

1601 — processor

1603 — memory

bus interface

transceiver — 1602

user interface — 1604

FIG. 16

## INTERNATIONAL SEARCH REPORT

| International application No. |
| --- |
| **PCT/CN2022/080915** |

**A. CLASSIFICATION OF SUBJECT MATTER**

H04W 4/40(2018.01)i; H04W 72/02(2009.01)i; H04W 76/14(2018.01)i; H04W 52/02(2009.01)n

According to International Patent Classification (IPC) or to both national classification and IPC

**B. FIELDS SEARCHED**

Minimum documentation searched (classification system followed by classification symbols)

H04L,H04W

Documentation searched other than minimum documentation to the extent that such documents are included in the fields searched

Electronic data base consulted during the international search (name of data base and, where practicable, search terms used)

CNTXT, VEN, ENTXT, CNKI, IEEE, 3GPP: 部分感知, 密度, 多, 两, 双, 第一, 第二, 子集, 参数, 非连续, 候选, 数量, 间隔, 时隙, partial sensing, density, two, dual, multi, first, second, subset, parameter, DRX, candidate, number, gap, slot

**C. DOCUMENTS CONSIDERED TO BE RELEVANT**

| Category* | Citation of document, with indication, where appropriate, of the relevant passages | Relevant to claim No. |
| --- | --- | --- |
| X | BEIJING XINWEI TELECOM TECHNOLOGY CO., LTD. "Discussion on partial sensing of pedestrian UEs"<br>*3GPP TSG RAN WG1 Meeting #86bis R1-1609681*, 30 September 2016 (2016-09-30),<br>section 2 | 1, 16, 23, 38 |
| X | MEDIATEK INC. "Resource allocation for sidelink power saving"<br>*3GPP TSG RAN WG1 #103-e R1-2008971*, 23 October 2020 (2020-10-23),<br>section 3 | 1, 16, 23, 38 |
| X | CN 109804682 A (LG ELECTRONICS INC.) 24 May 2019 (2019-05-24)<br>description, paragraphs [0145]-[0160] | 1, 16, 23, 38 |
| PX | WO 2021197987 A1 (FRAUNHOFER-GESELLSCHAFT ZUR FORDERUNG DER ANGEWANDTEN FORSCHUNG E. V. et al.) 07 October 2021 (2021-10-07)<br>claims 1-30 | 1-38 |
| PX | CN 113747577 A (HUAWEI TECHNOLOGIES CO., LTD.) 03 December 2021 (2021-12-03)<br>description, paragraphs [0149]-[0170], and figure 10 | 1-38 |
| A | CN 111246426 A (BEIJING SPREADTRUM HIGH-TECH COMMUNICATIONS TECHNOLOGY CO., LTD.) 05 June 2020 (2020-06-05)<br>entire document | 1-38 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **11 May 2022** | **30 May 2022** |

| Name and mailing address of the ISA/CN | Authorized officer |
| --- | --- |
| **China National Intellectual Property Administration (ISA/ CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT

International application No.

**PCT/CN2022/080915**

### C. DOCUMENTS CONSIDERED TO BE RELEVANT

| Category* | Citation of document, with indication, where appropriate, of the relevant passages | Relevant to claim No. |
|---|---|---|
| A | JP 2017208796 A (SONY CORP.) 24 November 2017 (2017-11-24)<br>entire document | 1-38 |
| A | US 2020029245 A1 (INTEL CORP.) 23 January 2020 (2020-01-23)<br>entire document | 1-38 |

Form PCT/ISA/210 (second sheet) (January 2015)

**INTERNATIONAL SEARCH REPORT**
Information on patent family members

International application No.

**PCT/CN2022/080915**

| Patent document cited in search report | | | Publication date (day/month/year) | Patent family member(s) | | | Publication date (day/month/year) |
|---|---|---|---|---|---|---|---|
| CN | 109804682 | A | 24 May 2019 | WO | 2018062898 | A1 | 05 April 2018 |
| | | | | KR | 20190051057 | A | 14 May 2019 |
| | | | | JP | 2019531653 | A | 31 October 2019 |
| | | | | EP | 3522630 | A1 | 07 August 2019 |
| | | | | JP | 2022050612 | A | 30 March 2022 |
| | | | | US | 2020037358 | A1 | 30 January 2020 |
| WO | 2021197987 | A1 | 07 October 2021 | None | | | |
| CN | 113747577 | A | 03 December 2021 | None | | | |
| CN | 111246426 | A | 05 June 2020 | WO | 2021143955 | A1 | 22 July 2021 |
| JP | 2017208796 | A | 24 November 2017 | EP | 3457785 | A1 | 20 March 2019 |
| | | | | JP | 2020092454 | A | 11 June 2020 |
| | | | | US | 2019132832 | A1 | 02 May 2019 |
| | | | | US | 2020344743 | A1 | 29 October 2020 |
| | | | | EP | 3737194 | A1 | 11 November 2020 |
| US | 2020029245 | A1 | 23 January 2020 | WO | 2018145067 | A1 | 09 August 2018 |
| | | | | EP | 3577967 | A1 | 11 December 2019 |
| | | | | EP | 3962229 | A1 | 02 March 2022 |

Form PCT/ISA/210 (patent family annex) (January 2015)

**REFERENCES CITED IN THE DESCRIPTION**

**Patent documents cited in the description**

- CN 202110356871